(19) Europäisches Patentamt
European Patent Office
Office européen des brevets

(11) **EP 4 597 637 A1**

(12) **EUROPEAN PATENT APPLICATION**
published in accordance with Art. 153(4) EPC

(43) Date of publication:
**06.08.2025 Bulletin 2025/32**

(21) Application number: 23872367.0

(22) Date of filing: **26.09.2023**

(51) International Patent Classification (IPC):
*H01M 4/62* (2006.01)    *C09D 17/00* (2006.01)
*H01B 1/24* (2006.01)    *H01M 4/13* (2010.01)
*H01M 4/139* (2010.01)

(52) Cooperative Patent Classification (CPC):
C09D 17/00; H01B 1/24; H01M 4/13; H01M 4/139;
H01M 4/62; Y02E 60/10

(86) International application number:
**PCT/JP2023/035026**

(87) International publication number:
**WO 2024/071144 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.09.2022 JP 2022153032**

(71) Applicant: artience Co., Ltd.
Chuo-ku
**Tokyo 104-0031 (JP)**

(72) Inventors:
• **NAKASONE, Daisuke**
  **Tokyo 104-8377 (JP)**
• **MOROISHI, Yasuyuki**
  **Tokyo 104-8377 (JP)**
• **OKABE, Masaki**
  **Tokyo 104-8377 (JP)**
• **ZUSHI, Kento**
  **Tokyo 104-8377 (JP)**

(74) Representative: **Becker, Eberhard**
  **Becker Kurig & Partner**
  **Patentanwälte mbB**
  **Bavariastraße 7**
  **80336 München (DE)**

(54) **CARBON NANOTUBE DISPERSION, AND RESIN COMPOSITION, CONDUCTIVE FILM, MIXTURE SLURRY, ELECTRODE, AND NONAQUEOUS ELECTROLYTE SECONDARY BATTERY USING SAME**

(57)    The present disclosure provides a carbon nanotube dispersion that contains a solvent and bundle-type carbon nanotubes formed from carbon nanotubes having an average diameter of 3 nm to 30 nm, a ratio of the number of bundle-type carbon nanotubes each in a shape having an outer diameter of 50 nm to 5 $\mu$m and a fiber length of 1 $\mu$m to 100 $\mu$m being 0.2% or more to the number of carbon nanotubes each having an outer diameter of 10 nm or more in the carbon nanotube dispersion as a reference.

EP 4 597 637 A1

# EP 4 597 637 A1

**Description**

Technical Field

The disclosure relates to a carbon nanotube dispersion containing carbon nanotubes having a bundle shape. More in detail, the disclosure relates to a resin composition containing the carbon nanotube dispersion and a resin, a mixture slurry containing the carbon nanotube dispersion, a resin, and an active material, a conductive film and an electrode film formed into a film-like shape from the above, and a nonaqueous electrolyte secondary battery including an electrode film and an electrolyte.

Related Art

In recent years, the development of electronics has been remarkable, and there has been an increasing demand for conductive materials used in various electronic devices or batteries to be reduced in size, weight, and cost, and improved in lifespan of products under various use environments. To date, conductive carbon materials having low volume resistivity, such as various graphites and carbon nanotubes, have been discussed.

Meanwhile, in the case of using a conductive material in various electronic devices or batteries, a dispersion in which the conductive material is dispersed in a solvent is often used. However, there is a significant problem that dispersion may lead to a decrease in characteristics, such as reduced conductivity. Hence, it is very important to prepare a dispersion that yields the desired characteristics.

Taking a lithium-ion secondary battery as an example, a carbon material, represented by graphite which has a large charge-discharge capacity per unit mass at a base potential close to that of lithium, is used as a negative electrode material used in the lithium-ion secondary battery. However, these electrode materials are used to the extent that their charge-discharge capacity per mass is close to a theoretical value, and energy density per mass of the battery approaches a limit. Thus, in order to increase the utilization rate of an electrode, attempts are being made to reduce conductive auxiliary agents or binders that do not contribute to discharge capacity.

As a conductive auxiliary agent, carbon black, ketjen black, graphene, a fine carbon material or the like is used, and carbon nanotubes being a type of fine carbon fiber are particularly often used. For example, Patent Documents 1 to 3 disclose that, by adding carbon nanotubes to graphite or silicon being a negative electrode active material, an electrode resistance value can be reduced, battery internal resistance can be improved, strength as well as expansion and contraction properties of the electrode can be improved, thereby improving the cycle life of the lithium-ion secondary battery.

Prior Art Documents

Patent Documents

Patent Document 1: Japanese Patent Laid-Open No. H4-155776
Patent Document 2: Japanese Patent Laid-Open No. H4-237971
Patent Document 3: Japanese Patent Laid-Open No. 2004-178922
Patent Document 4: Japanese Unexamined Patent Application Publication (Translation of PCT Application) No. 2018-534731
Patent Document 5: Japanese Unexamined Patent Application Publication (Translation of PCT Application) No. 2018-534747

However, it is difficult to stably obtain carbon nanotubes having a bundle shape as indicated in Patent Documents 4 to 5. It is particularly difficult to achieve excellent cycle characteristics in a battery using silicon as a negative electrode active material.

SUMMARY OF THE INVENTION

Problem to be Solved by the Disclosure

An object of the disclosure is to provide a carbon nanotube dispersion that exhibits excellent cycle characteristics when used in a battery, as well as to provide a resin composition, a conductive film, a mixture slurry, an electrode, and a nonaqueous electrolyte secondary battery using said dispersion.

Means for Solving the Problem

A carbon nanotube dispersion according to one aspect of the disclosure is a carbon nanotube dispersion is characterized by containing a solvent and bundle-type carbon nanotubes using carbon nanotubes having an average diameter of 3 nm to 30 nm. In the carbon nanotube dispersion, based on the number of carbon nanotubes having an outer diameter of 10 nm or more contained in the carbon nanotube dispersion, a proportion of the number of bundle-type carbon nanotubes of a shape having an outer diameter of 50 nm to 5 $\mu$m and a fiber length of 1 $\mu$m to 100 $\mu$m is 0.2% or more.

The carbon nanotube dispersion according to one aspect of the disclosure is characterized in that the bundle-type carbon nanotubes of a shape having an outer diameter of 50 nm to 5 $\mu$m and a fiber length of 1 $\mu$m to 100 $\mu$m have an average aspect ratio of 5 to 100.

The carbon nanotube dispersion according to one aspect of the disclosure is characterized by further containing a dispersant.

A conductive film according to one aspect of the disclosure is characterized by being a coated film of the carbon nanotube dispersion.

A carbon nanotube resin composition according to one aspect of the disclosure is characterized by containing the carbon nanotube dispersion and a binder.

A mixture slurry according to one aspect of the disclosure is characterized by containing the carbon nanotube resin composition and an active material.

An electrode film according to one aspect of the disclosure is characterized by being a coated film of the mixture slurry.

A nonaqueous electrolyte secondary battery according to one aspect of the disclosure is characterized by including a positive electrode, a negative electrode, and an electrolyte, in which at least one of the positive electrode and the negative electrode includes the electrode film.

Effects of the Invention

According to the disclosure, it is possible to provide a carbon nanotube dispersion that exhibits excellent cycle characteristics when used in a battery, as well as a resin composition, a conductive film, a mixture slurry, an electrode, and a nonaqueous electrolyte secondary battery using said dispersion.

BRIEF DESCRIPTION OF THE DRAWINGS

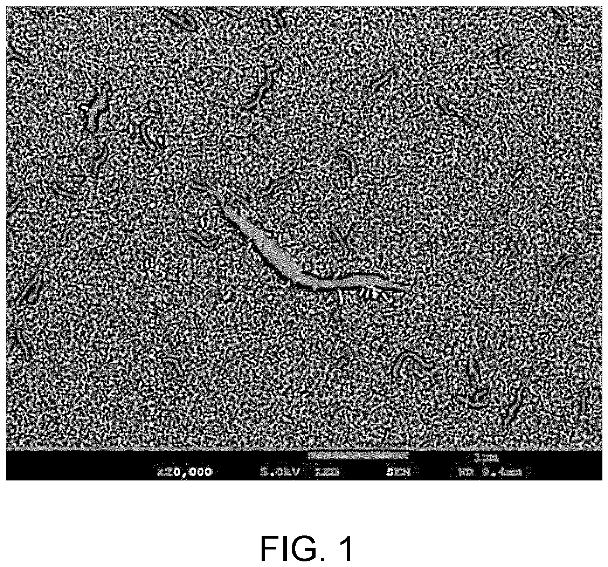

[FIG. 1] FIG. 1 is obtained by processing, by image analysis software (WinROOF 2015, manufactured by MITANI), an image obtained when a carbon nanotube dispersion described in Example 1 was observed at 20000 times magnification using a scanning electron microscope.

DESCRIPTION OF THE EMBODIMENTS

<Carbon Nanotube Dispersion>

A carbon nanotube dispersion of the disclosure is characterized by containing a solvent and bundle-type carbon nanotubes using carbon nanotubes having an average diameter of 3 nm to 30 nm. Based on the number of carbon nanotubes having an outer diameter of 10 nm or more contained in the carbon nanotube dispersion, a proportion of the number of bundle-type carbon nanotubes (X) of a shape having an outer diameter of 50 nm to 5 $\mu$m and a fiber length of 1 $\mu$m to 100 $\mu$m is 0.2% or more.

By containing a certain amount of bundle-type carbon nanotubes (X) having such a predetermined shape, not only does the resistivity of a mixture layer decrease, but the ability to follow expansion and contraction also improves. Accordingly, an electrode film is strengthened, and peel strength is improved. The stability of a coating film during charging and discharging where large stress is applied is improved, and a film thickness can be maintained. Excellent cycle characteristics can be exhibited.

The following describes in detail the carbon nanotube dispersion, resin composition, conductive film, mixture slurry, electrode, and nonaqueous electrolyte secondary battery of the disclosure. **In** this specification, carbon nanotube may be abbreviated as CNT.

<Bundle-type Carbon Nanotubes>

The bundle-type carbon nanotubes contained in the carbon nanotube dispersion of the disclosure are carbon nanotubes having a bundle shape, made using carbon nanotubes having an average diameter of 3 nm to 30 nm. The term "bundle-type carbon nanotubes" refer to a bundle in which multiple carbon nanotubes are arranged or aligned in a certain direction; the terms "outer diameter" and "fiber length" refer to an outer diameter (short diameter) and a fiber length (long diameter) of a bundle.

A dispersion of the disclosure contains a predetermined amount of bundle-type carbon nanotubes (X) having a predetermined outer diameter and fiber length.

The outer diameter and fiber length of the bundle-type carbon nanotubes in the dispersion can be obtained by observing and image-analyzing using a scanning electron microscope (SEM), a sample obtained by drying the dispersion, diluted as necessary, so that each carbon nanotube does not overlap and the size is easily distinguished.

In the case where carbon nanotubes aggregate due to dilution of the carbon nanotube dispersion, an additive such as 0.01 to 2 mass% of a dispersant or water-soluble solvent with respect to the solid content of the carbon nanotubes may be added, uniformly mixed using ultrasound, and then the mixture may be diluted 1000 times. The sample for SEM observation obtained by drying the dispersion can be specifically prepared as follows: the above diluted carbon nanotube dispersion is coated onto a mica substrate, the solvent is dried in an oven, and then a substrate surface on the coated side is sputtered with platinum.

In detail, in order to observe carbon nanotubes relatively appropriately using the scanning electron microscope, the outer diameter (short diameter), fiber length (long diameter), and area of each particle of the carbon nanotubes imaged at 10000 or 20000 times magnification are measured using image analysis software (WinROOF 2015, manufactured by MITANI). The shape of bundle-type carbon nanotubes is irregular. In this specification, since the value of an outer diameter within a single carbon nanotube has a range, a value obtained by dividing an area value by the fiber length (long diameter) is used as the outer diameter.

Next, 1000 carbon nanotube particles having an outer diameter of 10 nm or more that are obtained as described above are arbitrarily selected. Among these 1000 carbon nanotube particles, particles having an outer diameter of 50 nm to 5 $\mu$m and a fiber length of 1 $\mu$m to 100 $\mu$m are identified, and the number A is counted. A proportion (%) of the number of bundle-type carbon nanotubes (X) is calculated using the following equation.

$$\text{(Equation) Proportion (\%) of the number of bundle-type carbon nanotubes (X)} = A/1000 \times 100$$

The proportion of the number of bundle-type carbon nanotubes (X) is preferably 0.5% or more. The proportion is preferably 20% or less, more preferably 10% or less, and even more preferably 5% or less. For example, the proportion may be 0.5% to 20%.

From the perspective of cycle characteristics and rate of change in film thickness in particular, the proportion is preferably 0.5% to 20%.

In this specification, the values obtained by averaging the outer diameters and fiber lengths of particles having an outer diameter of 50 nm to 5 $\mu$m and a fiber length of 1 $\mu$m to 100 $\mu$m, which are identified as described above, are referred to as an average outer diameter and an average fiber length, respectively. A ratio between the average outer diameter and the average fiber length is referred to as an average aspect ratio.

In the dispersion of the disclosure, the average outer diameter of bundle-type carbon nanotubes having an outer diameter of 50 nm to 5 $\mu$m and a fiber length of 1 $\mu$m to 100 $\mu$m is preferably 50 nm to 1 $\mu$m, more preferably 50 nm to 500 nm. The average fiber length is preferably 1 $\mu$m to 50 $\mu$m, more preferably 1 $\mu$m to 10 $\mu$m. The average aspect ratio is preferably 5 to 200, more preferably 10 to 150.

The carbon nanotube dispersion of the disclosure may further contain bundle-type carbon nanotubes (Y) of a shape having an outer diameter of 10 nm or more and less than 50 nm and a fiber length of 1 $\mu$m to 5 $\mu$m. Such bundle-type carbon nanotubes (Y) mainly serve to form a network of conductive paths and improve cycle characteristics.

Based on the number of carbon nanotubes having an outer diameter of 10 nm or more and a fiber length of 0.2 $\mu$m or more contained in the carbon nanotube dispersion, a proportion (%) of the number of bundle-type carbon nanotubes (Y) mentioned above is preferably 10% to 60% from the perspective of improving cycle characteristics.

A method for calculating the above proportion (%) of the number is described. With respect to each particle of carbon nanotubes imaged at 5000 times magnification using a scanning electron microscope in accordance with the fiber length of the carbon nanotubes, the outer diameter (short diameter), fiber length (long diameter), and area are measured using image analysis software (WinROOF 2015, manufactured by MITANI). The shape of bundle-type carbon nanotubes is irregular. In this specification, since the value of an outer diameter within a single carbon nanotube has a range, a value obtained by dividing an area value by the fiber length (long diameter) is used as the outer diameter.

Next, 1000 carbon nanotube particles having an outer diameter of 10 nm or more and a fiber length of 0.2 $\mu$m or more that are obtained as described above are arbitrarily selected. Among these 1000 carbon nanotube particles, particles having an outer diameter of 10 nm or more and less than 50 nm and a fiber length of 1 $\mu$m to 5 $\mu$m are identified, and the number B is counted. A proportion (%) of the number of bundle-type carbon nanotubes (Y) is calculated using the following equation.

$$\text{(Equation) Proportion (\%) of the number of bundle-type carbon nanotubes (Y)} = B/1000 \times 100$$

From the perspective of cycle characteristics, the proportion of the number of bundle-type carbon nanotubes (Y) is preferably 10% or more, more preferably 20% or more. The proportion is preferably 60% or less, more preferably 35% or less.

The carbon nanotube dispersion of the disclosure may further contain bundle-type carbon nanotubes (Z) of a shape having an outer diameter of 10 nm or more and less than 50 nm, and a fiber length of 0.2 $\mu$m or more and less than 1 $\mu$m. It is inferred that such bundle-type carbon nanotubes (Z) not only reduce the volume resistivity but also contribute to an improvement in cycle characteristics by entering into the vicinity of a surface of an active material described later or the like or into a gap of a conductive network.

Based on the number of carbon nanotubes having an outer diameter of 10 nm or more and a fiber length of 0.2 $\mu$m or more contained in the carbon nanotube dispersion, a proportion (%) of the number of bundle-type carbon nanotubes (Z) mentioned above is preferably 50% to 80% from the perspective of improving cycle characteristics.

A method for calculating the above proportion of the number is described. With respect to each particle of carbon nanotubes imaged at 5000 times magnification using a scanning electron microscope in accordance with the fiber length of the carbon nanotubes, the outer diameter (short diameter), fiber length (long diameter), and area are measured using image analysis software (WinROOF 2015, manufactured by MITANI). The shape of bundle-type carbon nanotubes is irregular. In this specification, since the value of an outer diameter within a single carbon nanotube has a range, a value obtained by dividing an area value by the fiber length (long diameter) is used as the outer diameter.

Next, carbon nanotube particles having an outer diameter of 10 nm or more and a fiber length of 0.2 $\mu$m or more that are obtained as described above are observed, and 1000 particles are arbitrarily selected. Among these 1000 carbon nanotube particles, particles having an outer diameter of 10 nm or more and less than 50 nm and a fiber length of 0.2 $\mu$m or more and less than 1 $\mu$m are identified, and the number C is counted. A proportion (%) of the number of bundle-type carbon nanotubes (Z) is calculated using the following equation.

$$\text{(Equation) Proportion (\%) of the number of bundle-type carbon nanotubes (Z)} = C/1000 \times 100$$

From the perspective of volume resistivity, the proportion of the number of bundle-type carbon nanotubes (Z) is preferably 30% or more, more preferably 50% or more. The proportion is preferably 90% or less, more preferably 70% or less.

By containing the bundle-type carbon nanotubes (X), (Y), and (Z) different in outer diameter and fiber length in an optimal balance, the dispersion of the disclosure is improved in cycle characteristics and film thickness retention. From the perspective of cycle characteristics and film thickness retention, a ratio (proportion (%) of the number of (Y) / proportion (%) of the number of (Z)) of the proportion (%) of the number of bundle-type carbon nanotubes (Y) to the proportion (%) of the number of bundle-type carbon nanotubes (Z) is preferably 0.1 or more, more preferably 0.3 or more. The ratio is preferably 1.3 or less, more preferably 1.0 or less, and even more preferably 0.6 or less. For example, the ratio may be 0.3 to 0.6.

A dispersion containing such bundle-type carbon nanotubes can be obtained, for example, by promoting interaction between carbon nanotubes and then dispersing them in a solvent (also referred to as a dispersion solvent). In order to promote interaction between carbon nanotubes, it is preferable to apply shear (force) or impact (force) to the carbon nanotubes, and to perform wet mixing using a solvent (also referred to as a treatment solvent). However, the disclosure is not limited thereto.

As an example like this, the following can be mentioned. Treated carbon nanotubes are dispersed in the presence of a dispersion solvent, in which the treated carbon nanotubes are obtained by wet mixing so that shear (force) or impact (force) is applied using an optimal device in the presence of an optimal treatment solvent so that selective aggregation occurs between carbon nanotubes having an average diameter of 3 nm to 30 nm, followed by calcination. By dispersing the treated carbon nanotubes obtained as described above, a dispersion containing a predetermined amount of bundle-type carbon nanotubes (X) of a predetermined shape as defined in the disclosure can be obtained.

[Raw Carbon Nanotubes]

A raw carbon nanotube used for forming bundle-type carbon nanotubes refers to a carbon nanotube being a structural unit constituting bundle-type carbon nanotubes (bundle). It is important that these raw carbon nanotubes have an average diameter of 3 nm to 30 nm. The carbon nanotubes having such an average diameter are inexpensive and readily available. In addition, by using the carbon nanotubes having such an average diameter, long and highly flexible bundle-type carbon nanotubes can be obtained, and excellent cycle characteristics can be exhibited.

A diameter of the raw carbon nanotubes can be measured, for example, at 5 million times magnification, using a transmission electron microscope (TEM). The average diameter of the raw carbon nanotubes is a value obtained by measuring and averaging the diameters in 10 arbitrary places in carbon nanotube fibers. The average diameter of the raw carbon nanotubes is preferably 5 nm to 20 nm.

Carbon nanotubes have a shape in which planar graphite is rolled into a cylindrical shape; multilayered carbon nanotubes have a structure in which two or three or more layers of graphite are rolled. A side wall of the carbon nanotubes does not necessarily need to be of a graphite structure. For example, carbon nanotubes having a side wall of an amorphous structure can also be used as the carbon nanotubes. These carbon nanotubes may include carbon nanotubes having multiple layers.

The raw carbon nanotubes used in the disclosure are not particularly limited if their average diameter is 3 nm to 30 nm. The number of layers of the raw carbon nanotubes is preferably 2 or more, more preferably 3 or more. The number of layers is preferably 30 or less, more preferably 20 or less, and even more preferably 10 or less.

The shape of the raw carbon nanotubes is not limited, and various shapes including needle-like shape, cylindrical tube-like shape, fishbone shape (fishbone or cup-stacked type) and coil-like shape can be used. Plate-like or platelet-like secondary aggregates obtained by performing dry treatment on cylindrical tube-like carbon nanotubes may be used. The shape of the raw carbon nanotubes used in the disclosure is preferably a needle-like shape or a cylindrical tube-like shape. The carbon nanotubes may be of a single shape or a combination of two or more shapes.

Examples of forms of the raw carbon nanotubes include, but are not limited to, graphite whiskers, filamentous carbon, graphite fibers, ultra-fine carbon tubes, carbon tubes, carbon fibrils, carbon microtubes, and carbon nanofibers. The carbon nanotubes may be in a single one of or a combination of two or more of these forms.

The raw carbon nanotubes have a Brunauer-Emmett-Teller (BET) specific surface area of preferably 10 to 1500 $m^2/g$, more preferably 150 to 800 $m^2/g$, and even more preferably 200 to 700 $m^2/g$.

The raw carbon nanotubes have a volume resistivity of preferably $1.0 \times 10^{-2}$ $\Omega \cdot cm$ or less, more preferably $5.0 \times 10^{-3}$ $\Omega \cdot cm$ or less, and even more preferably $3.0 \times 10^{-3}$ $\Omega \cdot cm$ or less. The volume resistivity of the carbon nanotubes can be measured using a powder resistivity measuring device (Loresta-GP Powder Resistivity Measuring System MCP-PD51, manufactured by Nittoseiko Analytech).

Carbon purity of the raw carbon nanotubes is represented by the content (%) of carbon atoms in the carbon nanotubes. The carbon purity is preferably 90 mass% or more, more preferably 95 mass% or more, and even more preferably 98 mass% or more, with respect to 100 mass% of the carbon nanotubes.

The amount of metal contained in the raw carbon nanotubes is preferably 10 mass% or less, more preferably 5 mass% or less, and even more preferably 2 mass% or less, with respect to 100 mass% of the carbon nanotubes. Examples of metals contained in the carbon nanotubes include a metal or metal oxide used as a catalyst in synthesizing carbon nanotubes. Specific examples include metals and metal oxides such as cobalt, nickel, aluminum, magnesium, silica, manganese, and molybdenum, and composite oxides thereof.

The raw carbon nanotubes generally exist as secondary particles. The shape of the secondary particles may be, for example, a state in which carbon nanotubes being general primary particles are intricately intertwined. The shape of the secondary particles may also be an aggregate of secondary particles in which carbon nanotubes are linear. Secondary particles being an aggregate of linear carbon nanotubes are easy to loosen compared to carbon nanotubes that are intertwined. Linear carbon nanotubes have good dispersibility compared to intertwined carbon nanotubes, and thus can be suitably used as carbon nanotubes.

The raw carbon nanotubes may be surface-treated carbon nanotubes. The raw carbon nanotubes may be carbon nanotube derivatives to which a functional group represented by a carboxyl group is attached. Carbon nanotubes having therein an organic compound, metal atoms, or a substance represented by fullerene can also be used.

The raw carbon nanotubes may be carbon nanotubes produced by any method. Carbon nanotubes can generally be produced by laser ablation, arc discharge, thermal chemical vapor deposition (CVD), plasma CVD, and combustion. However, the disclosure is not limited thereto. For example, carbon nanotubes can be produced by contacting and reacting a carbon source with a catalyst at 500 to 1000 °C in an atmosphere having an oxygen concentration of 1 volume% or less. The carbon source may be at least any one of hydrocarbons and alcohols.

Any conventionally known gas can be used as the raw material gas that serves as the carbon source for the raw carbon nanotubes. For example, hydrocarbons represented by methane, ethylene, propane, butane, and acetylene, carbon monoxide, and alcohols can be used as a carbon-containing raw material gas. However, the disclosure is not limited thereto. Particularly, from the perspective of ease of use, at least any one of hydrocarbons and alcohols is desirably used as the raw material gas.

[Treatment Solvent]

As the treatment solvent for wet mixing carbon nanotubes having an average diameter of 3 nm to 30 nm, highly polar alcohol-based solvents and water are preferable. By treatment using highly polar alcohol-based solvents or water, a difference in polarity with the surface of carbon nanotubes that is hydrophobic increases, which is advantageous in promoting the aggregation of carbon nanotubes and the formation of bundles, and is thus preferable.

The term "highly polar" refers to having a Hansen solubility parameter (SP value) of 10 or more at 25 °C. The Hansen solubility parameter (SP value) at 25 °C can be calculated according to a Hansen solubility parameter application (Hansen Solubility Parameters in Practice (HSPiP) Ver. 5.1.05, developed by Dr. Hansen, Prof. Abbott, and Dr. Yamamoto).

Examples of the above highly polar alcohol-based solvents include ethanol, propyl alcohol, and butyl alcohol. However, the disclosure is not limited thereto, and any solvent that provides an optimal mixing state with carbon nanotubes may be used. The SP values of monovalent aliphatic alcohols are shown below: methanol (SP value: 14.4; the same applies hereinafter), ethanol (13.0), 2-propanol (isopropyl alcohol, IPA) (11.5), 1-butanol (11.3), 2-butanol (10.8), 2-methyl-1-propanol (11.1), 2-methyl-2-propanol (10.6), 1-pentanol (10.7), 2-pentanol (10.5), isopentanol (10.4), and t-pentanol (10.3).

[Wet Mixing]

Examples of devices used for wet mixing include, but are not limited to: mixers, such as a disperser, a homomixer, or a planetary mixer; homogenizers, such as "CLEARMIX" manufactured by M Technique, or "FILMIX" manufactured by PRIMIX; a paint conditioner manufactured by Red Devil; a ball mill; sand mills, such as "DYNO-MILL" manufactured by Shinmaru Enterprises; a media-type disperser, such as an attritor or a CoBall mill; wet jet mills, such as "Genus PY" manufactured by Genus, "Starburst" manufactured by Sugino Machine, and "Nanomizer" manufactured by Nanomizer; and media-less dispersers, such as "Clear SS-5" manufactured by M Technique; or "MICROS" manufactured by Nara Machinery; or other roll mills and kneaders. There are cases where it is preferable to use a wet mixing device that has been treated to prevent metal contamination from the device. For example, in the case of using a media-type disperser, it is preferable to use a disperser with ceramic or resin agitators and vessels, or to use a disperser with metal agitators and vessels whose surfaces have been treated by tungsten carbide thermal spraying or resin coating or the like. As the media, it is preferable to use glass beads, or ceramic beads such as zirconia beads or alumina beads. In the case of using a roll mill, it is preferable to use a ceramic roll. One type of dispersion device may be used alone or multiple types of dispersion device may be used in combination.

[Boron Source]

When carbon nanotubes are subjected to wet mixing using a treatment solvent, a boron source may be included. It is inferred that, by performing wet treatment in the presence of the boron source and the treatment solvent, the boron source and carbon nanotubes are uniformly mixed, and through a calcination process, the formation of a bundle-type structure in which multiple carbon nanotubes are connected is promoted. The treated carbon nanotubes obtained in this manner maintain their bundle shape even after dispersion, and a carbon nanotube dispersion that exhibits excellent cycle characteristics can be obtained.

In the case of using the boron source, it is preferable to dissolve the boron source in the treatment solvent before treating the raw carbon nanotubes. By treatment in this manner, the boron source and carbon nanotubes are relatively uniformly mixed, and excellent cycle characteristics can be exhibited.

The boron source is not particularly limited, and examples include boron carbide, boron oxide, boron nitride, a metal boride, a boron oxoacid, a borane, and a boron-containing organic compound. Specifically, examples of boron carbide include $B_4C(B_{12}C_3)$ and $B_{12}C_2(B_6C)$; examples of boron oxide include $BC_2O$, $BCO_2$, $B_2O_2$, $B_2O_3$, $B_4O_3$, and $B_4O_5$; examples of boron nitride include BN; examples of metal boride include $AlB_2$, CoB, FeB, $MgB_2$, NiB, and $TiB_2$; examples of boron oxoacid include orthoboric acid, metaboric acid, and tetraboric acid; examples of borane include monoborane, diborane, and decaborane; and examples of boron-containing organic compound include: boric acid esters, such as trimethyl borate and triethyl borate; substituted boranes, such as triethylborane and triphenylborane; and boronic acids, such as phenylboronic acid and phenylboronic acid esters.

From the perspective of forming a bundle shape, the boron source preferably has high solubility in the treatment solvent, and it is more preferable to use boric acid. By subjecting the raw carbon nanotubes to wet treatment in the presence of the treatment solvent or both the treatment solvent and the boron source, followed by heat treatment (calcination), the treated carbon nanotubes can be obtained.

In the case of using the boron source, a mass ratio between the raw carbon nanotubes and the boron source is not particularly limited. However, a proportion of the boron source to 100 parts by mass of the raw carbon nanotubes is preferably 0.01 to 300 parts by mass, more preferably 0.05 to 100 parts by mass, and even more preferably 0.1 to 50 parts by mass.

In the case where the raw materials do not uniformly dissolve or disperse, in order to improve the wettability and dispersibility of each raw material with respect to the solvent, a dispersant may be added as necessary, and then be dispersed and mixed.

Temperature conditions for performing heat treatment on a mixture of the raw carbon nanotubes and the boron source vary depending on the type or amount of the raw carbon nanotubes or the boron source, and are not particularly limited. However, the temperature is preferably 1000 to 3000 °C, more preferably 1100 to 2500 °C, and even more preferably 1200 to 2000 °C. The heating time is not particularly limited, but is preferably 10 minutes to 72 hours, more preferably 30 minutes to 10 hours.

In order to prevent a side reaction such as oxidation of the raw materials, the atmosphere in a heat treatment process is preferably an inert gas atmosphere such as nitrogen atmosphere or argon atmosphere, or a vacuum atmosphere.

The heat treatment process may be a single-stage process with constant atmosphere, temperature, and time, but may also be a multi-stage process with varying atmosphere, temperature, and time.

<Solvent>

Next, the solvent used in the carbon nanotube dispersion of the disclosure will be described. The solvent is not particularly limited if it is capable of dispersing carbon nanotubes. However, the solvent is preferably water, or any single type of organic solvent, or a mixed solvent including two or more types of organic solvents. The solvent is more preferably water, or a solvent including any single type of water-soluble organic solvent, or a mixed solvent including two or more types of water-soluble organic solvents. In the case of using a dispersant described later, it is preferable that the solvent can partially or completely dissolve the dispersant. The solvent is not particularly limited, and preferably contains water or a water-soluble organic solvent.

Examples of organic solvents that can be used include alcohol-based solvents (such as methanol), polyhydric alcohol-based solvents (such as ethylene glycol), polyhydric alcohol etherbased solvents (such as ethylene glycol monomethyl ether), amine-based solvents (such as ethanolamine), amide-based solvents (such as N-methyl-2-pyrrolidone (NMP)), heterocyclic solvents (such as γ-butyrolactone), sulfoxide-based solvents (such as dimethyl sulfoxide), sulfone-based solvents (such as sulfolane), aromatic solvents (such as toluene, xylene), hydrocarbon-based solvents (such as hexane), lower ketone-based solvents (such as acetone), and ester-based solvents (such as ethyl acetate).

Preferable examples of water-soluble organic solvents that can be used include amide-based solvents (such as N-methyl-2-pyrrolidone (NMP), N-ethyl-2-pyrrolidone (NEP), N,N-dimethylformamide, N,N-dimethylacetamide, N,N-diethylacetamide, and N-methylcaprolactam), heterocyclic solvents (such as cyclohexylpyrrolidone, 2-oxazolidone, 1,3-dimethyl-2-imidazolidinone, and γ-butyrolactone), sulfoxide-based solvents (such as dimethyl sulfoxide), sulfone-based solvents (such as hexamethylphosphorotriamide and sulfolane), alcohol-based solvents (such as methanol and ethanol), polyhydric alcohol-based solvents (such as ethylene glycol and diethylene glycol), lower ketone-based solvents (such as acetone and methyl ethyl ketone), and others such as tetrahydrofuran, urea, and acetonitrile.

<Dispersion>

The carbon nanotube dispersion of the disclosure may further contain a dispersant. The dispersant serves to break up the aggregation of carbon nanotubes and improving the stability of a dispersion. The dispersant is not particularly limited as long as it can stabilize the dispersion of carbon nanotubes. For example, a surfactant or a resin-type dispersant can be used. Surfactants are mainly classified into anionic, cationic, nonionic, and amphoteric types. An appropriate type of dispersant can be used in an appropriate amount according to the characteristics required for the dispersion of carbon nanotubes.

Examples of anionic surfactants include, but are not limited to, fatty acid salt, polysulfonic acid salt, polycarboxylic acid salt, alkyl sulfate ester salt, alkylarylsulfonic acid salt, alkylnaphthalenesulfonic acid salt, dialkylsulfonic acid salt, dialkylsulfosuccinic acid salt, alkyl phosphate salt, polyoxyethylene alkyl ether sulfate salt, polyoxyethylene alkylaryl ether sulfate salt, naphthalene sulfonic acid formalin condensate, polyoxyethylene alkyl phosphate sulfonic acid salt, glycerol borate fatty acid ester, and polyoxyethylene glycerol fatty acid ester. Furthermore, specific examples include sodium dodecylbenzenesulfonate, sodium lauryl sulfate, sodium polyoxyethylene lauryl ether sulfate, polyoxyethylene nonylphenyl ether sulfate ester salt, and sodium salt of β-naphthalene sulfonic acid formalin condensate.

Examples of cationic surfactants include alkylamine salts and quaternary ammonium salts. Specific examples include stearylamine acetate, trimethyl coconut ammonium chloride, trimethyl tallow ammonium chloride, dimethyl dioleyl ammonium chloride, methyl oleyl diethanol chloride, tetramethylammonium chloride, lauryl pyridinium chloride, lauryl pyridinium bromide, lauryl pyridinium disulfate, cetyl pyridinium bromide, 4-alkylmercaptopyridine, poly(vinylpyridine)-dodecyl bromide, and dodecylbenzyltriethylammonium chloride.

Examples of nonionic surfactants include, but are not limited to, polyoxyethylene alkyl ether, polyoxyalkylene derivative, polyoxyethylene phenyl ether, sorbitan fatty acid ester, polyoxyethylene sorbitan fatty acid ester, and alkyl aryl ether. Specific examples include polyoxyethylene lauryl ether, sorbitan fatty acid ester, and polyoxyethylene octylphenyl ether. Examples of amphoteric surfactants include amino carboxylic acid salt.

Surfactants may be used alone or in combination of two or more thereof. For example, a combination of an anionic surfactant and a nonionic surfactant, or a combination of a cationic surfactant and a nonionic surfactant can be utilized. **In** such cases, an appropriate blending amount is preferably set for each surfactant component. The combination of an anionic surfactant and a nonionic surfactant is preferable in terms of combination. The anionic surfactant is preferably a polycarboxylic acid salt. The nonionic surfactant is preferably a polyoxyethylene phenyl ether.

Examples of resin-type dispersants include cellulose derivative (such as cellulose acetate, cellulose acetate butyrate, cellulose butyrate, cyanoethyl cellulose, ethyl hydroxyethyl cellulose, nitrocellulose, methyl cellulose, ethyl cellulose, hydroxyethyl cellulose, hydroxypropyl cellulose, hydroxypropyl methyl cellulose, and carboxymethyl cellulose), polyvinyl alcohol, polyvinyl butyral, polyvinylpyrrolidone, polyacrylonitrile-based polymer, polyacrylic acid, and various rubbers.

Particularly preferable are methyl cellulose, ethyl cellulose, carboxymethyl cellulose, polyvinyl alcohol, polyvinyl butyral, polyvinylpyrrolidone, polyacrylonitrile-based polymer, polyacrylic acid, and various rubbers (for example, partially hydrogenated nitrile rubber).

In the resin-type dispersant, particularly by using a polymer containing as a structural unit one or more selected from the group consisting of a nitrile group-containing structural unit, a carboxyl group-containing structural unit, a hydroxyl group-containing structural unit, and a heterocyclic ring-containing structural unit, the adsorption to boron-containing carbon nanotubes and the affinity for media are enhanced, which is relatively preferable. The polymer preferably contains an alkylene structure in its main chain. In the polymer, by having a structure of any of a nitrile group, a carboxyl group, a hydroxyl group, and a heterocyclic ring, which have strong polarization, the adsorption to carbon nanotubes and the affinity for media are enhanced, allowing the carbon nanotubes to stably exist in a medium. When the polymer contains two or more selected from the group consisting of a nitrile group-containing structural unit, a carboxyl group-containing structural unit, a hydroxyl group-containing structural unit, and a heterocyclic ring-containing structural unit, the adsorption to carbon nanotubes and the affinity for media are further enhanced, which is relatively preferable.

The nitrile group-containing structural unit is a structural unit containing a nitrile group, and preferably includes a structural unit containing an alkylene structure substituted with a substituent containing a nitrile group. The alkylene structure is preferably a linear or branched alkylene structure. The number of nitrile groups contained in the nitrile group-containing structural unit is preferably one or two, more preferably one. A method for introducing the nitrile group-containing structural unit into the polymer is not particularly limited. For example, a method for preparing the polymer by polymerization reaction of a monomer containing a nitrile group may be preferably used.

Examples of monomers containing a nitrile group include acrylonitrile, methacrylonitrile, fumaronitrile, which may be used alone or in combination of two or more thereof. Particularly, from the perspective of enhancing intermolecular forces between polymers and/or between the polymer and a dispersed substance (adsorbed substance), as well as the availability of raw materials and reactivity, it is preferable that the monomer containing a nitrile group is acrylonitrile. The content of the nitrile group-containing structural unit is preferably 15 mass% or more, more preferably 20 mass% or more, and even more preferably 30 mass% or more, based on the mass of the polymer (that is, in the case where the mass of the polymer is 100 mass%). The content is preferably 100 mass% or less, more preferably 90 mass% or less, and even more preferably 85 mass% or less. It is thought that, by setting the content of the nitrile group-containing structural unit within the above range, the adsorption to a dispersed substance and the affinity for a dispersion medium can be controlled, allowing the dispersed substance to stably exist in the dispersion medium. It is also thought that the affinity of the polymer to an electrolyte can be controlled, preventing problems such as that polymer dissolving in the electrolyte in a battery and increasing the resistance of the electrolyte.

The carboxyl group-containing structural unit is a structural unit containing a carboxyl group, and preferably includes a structural unit containing an alkylene structure substituted with a substituent containing a carboxyl group. The alkylene structure is preferably a linear or branched alkylene structure. The number of carboxyl groups contained in the carboxyl group-containing structural unit is preferably one or two, more preferably one. A method for introducing the carboxyl group-containing structural unit into the polymer is not particularly limited, and examples thereof include a method for preparing the polymer by polymerization reaction of a monomer containing a carboxyl group, or a method for preparing the polymer by polymerization reaction of a monomer containing a functional group other than carboxyl group and then modifying the same to a carboxyl group.

Examples of monomers containing a carboxyl group include unsaturated fatty acid such as (meth)acrylic acid, crotonic acid, itaconic acid, maleic acid, fumaric acid, and citraconic acid, as well as 2-(meth)acryloyloxyethyl phthalate, and 2-(meth)acryloyloxypropyl phthalate. A carboxyl group-containing monomer may be obtained by hydrolyzing a carbamoyl group of a polymer obtained by polymerization reaction of a monomer containing a carbamoyl group such as (meth)acrylamide. The carboxyl group-containing monomer is preferably an unsaturated fatty acid, more preferably (meth)acrylic acid, and even more preferably acrylic acid.

From the perspective of having moderate affinity for solvents, the content of the carboxyl group-containing structural unit is preferably 60 mass% or more, more preferably 80 mass% or more, and preferably 98 mass% or less, and may be 100 mass%, based on the mass of the polymer (that is, in the case where the mass of the polymer is 100 mass%). When one or more selected from the group consisting of a nitrile group-containing structural unit, a hydroxyl group-containing structural unit, and a heterocyclic ring-containing structural unit are further contained, the affinity for carbon nanotubes and media is improved, which is relatively preferable. In the case of further containing one or more selected from the group consisting of a nitrile group-containing structural unit, a hydroxyl group-containing structural unit, and a heterocyclic ring-containing structural unit, the content of the carboxyl group-containing structural unit is preferably 3 mass% or more, more preferably 10 mass% or more, and even more preferably 15 mass% or more, based on the mass of the polymer (that is, when the mass of the polymer is 100 mass%). From the perspective of electrolyte resistance, the content is preferably 50 mass% or less, more preferably 35 mass% or less, and even more preferably 30 mass% or less.

The hydroxyl group-containing structural unit is a structural unit containing a hydroxyl group, and preferably includes a structural unit containing an alkylene structure substituted with a substituent containing a hydroxyl group. The alkylene structure is preferably a linear or branched alkylene structure. The number of hydroxyl groups contained in the hydroxyl group-containing structural unit is preferably one or two, more preferably one. A method for introducing the hydroxyl group-containing structural unit into the polymer is not particularly limited, and examples thereof include a method for preparing the polymer by polymerization reaction of a monomer containing a hydroxyl group, or a method for preparing the polymer by polymerization reaction of a monomer containing a functional group other than hydroxyl group and then modifying the same to a hydroxyl group.

Examples of monomers containing a hydroxyl group include 2-hydroxyethyl (meth)acrylate, 3-hydroxypropyl (meth)acrylate, 4-hydroxybutyl (meth)acrylate, glycerol mono(meth)acrylate, 4-hydroxyvinylbenzene, 2-hydroxy-3-phenoxypropyl acrylate, and caprolactone adducts (number of moles added: 1 to 5) of these monomers. The monomer containing a hydroxyl group is preferably hydroxyalkyl (meth)acrylate, more preferably 2-hydroxyethyl (meth)acrylate, and even more preferably 2-hydroxyethyl acrylate.

Examples of the method for preparing the polymer by polymerization reaction of a monomer containing a functional group other than hydroxyl group and then modifying the same to a hydroxyl group include a method in which an acetyl group of polyvinyl acetate obtained by polymerizing vinyl acetate is saponified with an alkali such as sodium hydroxide to form a hydroxyl group (saponification reaction). By changing the concentration of sodium hydroxide and the treatment time, A reaction rate of saponification (degree of saponification) can be arbitrarily controlled.

For purposes such as improving the affinity for carbon nanotubes and media, a hydroxyl group in the polymer may be reacted with an aldehyde compound to be modified into an acetal group for use (acetalization). The aldehyde compound used for the acetalization reaction may be, for example, a linear, branched, cyclic saturated, unsaturated, or aromatic aldehyde compound having 1 to 15 carbon atoms, but is not limited thereto. Specific examples include formaldehyde, acetaldehyde, propionyl aldehyde, n-butyl aldehyde, isobutyl aldehyde, tert-butyl aldehyde, and benzaldehyde. These aldehyde compounds may be used alone or in combination of two or more thereof. From the perspective of versatility, linear, branched, cyclic saturated, unsaturated, or aromatic aldehyde compounds having 1 to 10 carbon atoms are preferable, and linear aldehyde compounds having 1 to 4 carbon atoms are more preferable. By changing the aldehyde compound and the treatment time, a reaction rate of acetalization (degree of acetalization) can be arbitrarily controlled.

The content of the hydroxyl group-containing structural unit is preferably 80 mass% or more, more preferably 85 mass% or more, and preferably 99.8 mass% or less, based on the mass of the polymer (that is, when the mass of the polymer is 100 mass%). However, in the case of further containing one or more selected from the group consisting of a nitrile group-containing structural unit, a hydroxyl group-containing structural unit, and a heterocyclic ring-containing structural unit, the content is preferably 5 mass% or more, and preferably 95 mass% or less, more preferably 85 mass% or less. By setting the content within the above range, polarization can be strengthened and the affinity for carbon nanotubes and media can be improved, and this is also preferable from the perspective of electrolyte resistance. For the same reasons as those for the content of the hydroxyl group-containing structural unit, the content of acetal groups is preferably within the preferable range of the content of the hydroxyl group-containing structural unit.

The heterocyclic ring-containing structural unit is a structural unit containing a heterocyclic ring, and is more preferably a structural unit containing an alkylene structure substituted with a substituent containing a heterocyclic ring. The alkylene structure is preferably a linear or branched alkylene structure. The heterocyclic ring contained in the heterocyclic ring-containing structural unit may be a monocyclic structure or a fused ring structure, and is preferably a monocyclic structure. The number of heterocyclic rings contained in the heterocyclic ring-containing structural unit is preferably one or two, more preferably one. The heterocyclic ring contains atoms other than carbon as atoms constituting the ring, and contains, for example, one or two or more nitrogen, oxygen, and sulfur atoms. The atoms other than carbon constituting the ring are preferably nitrogen or oxygen, and more preferably nitrogen. When atoms other than carbon are contained as atoms constituting the ring, polarization occurs within the heterocyclic ring, enabling it to act strongly on carbon nanotubes. A method for introducing the heterocyclic ring into the polymer is not particularly limited. For example, a method for preparing the polymer by polymerization reaction of a monomer containing a heterocyclic ring can be used.

As monomers containing a heterocyclic ring, a N-vinyl cyclic amide structural unit is preferable, and examples thereof include N-vinyl-2-pyrrolidone, N-vinyl-ε-caprolactam, N-vinyl-2-piperidone, N-vinyl-3-morpholinone, N-vinyl-1,3-oxazin-2-one, and N-vinyl-3,5-morpholinedione. N-vinyl-2-pyrrolidone is particularly preferable from the perspective of improving battery characteristics. These may be used alone or in combination of two or more thereof.

From the perspective of enhancing the effect on the carbon nanotubes, the content of the heterocyclic ring-containing structural unit is preferably 70 mass% or more, more preferably 80 mass% or more, even more preferably 90 mass% or more, particularly preferably 95 mass% or more, and may be 100 mass%, based on the mass of the polymer (that is, in the case where the mass of the polymer is 100 mass%).

The polymer may further contain one or more structural units selected from the group consisting of an active hydrogen group-containing structural unit (except carboxyl group and hydroxyl group), a basic group-containing structural unit, and an ester group-containing structural unit, as other structural units. By selecting and containing the above structural units according to characteristics such as hydrophilicity, hydrophobicity, acidity, and basicity of a substrate to which a conductive material dispersion of the disclosure is applied or a material to be mixed therewith, the polymer can be applied to various applications.

The active hydrogen group-containing structural unit is a structural unit having, for example, a primary amino group, a secondary amino group, or a mercapto group, as an active hydrogen group. Here, "primary amino group" means -NH2 (amino group), and "secondary amino group" means a group in which one hydrogen atom on a primary amino group is substituted with an organic residue such as an alkyl group. However, in this specification, the active hydrogen groups do not include the primary amino groups and secondary amino groups in acid amides.

The basic group-containing structural unit is a structural unit having a basic group. Examples of the basic group include a tertiary amino group and an amide group. Although basic group-containing structural units may include structural units having a primary amino group and structural units having a secondary amino group, in the disclosure, the structural units having a primary amino group and the structural units having a secondary amino group are treated as the aforementioned active hydrogen group-containing structural units and are not included in the basic group-containing structural units.

The ester group-containing structural unit is a structural unit having a structure represented by $(R1)_2C{=}CH{-}CO{-}O{-}R2$ (where R1 is a hydrogen atom or a methyl group, with at least one being a hydrogen atom, and R2 is an alkyl group which may have a substituent).

Those containing the aforementioned active hydrogen group or the aforementioned basic group as a substituent of the alkyl group are treated as the aforementioned active hydrogen group-containing structural units or the aforementioned basic group-containing structural units, and are not included in the ester group-containing structural units.

In the case where a polymer is used as a dispersant in a carbon nanotube dispersion, the content of the polymer is preferably determined according to the specific surface area and wettability of the carbon nanotubes. Based on the mass of the treated carbon nanotubes as 100 mass%, the content of the polymer is preferably 2 mass% or more, more preferably 20 mass% or more, even more preferably 30 mass% or more, and preferably 250 mass% or less, more preferably 150 mass% or less, and even more preferably 100 mass% or less.

The dispersant preferably contains at least the polymer. The dispersant may further contain any polymer, any copolymer, or the like. The content of the polymer in the dispersant is preferably 50 mass% or more, more preferably 80 mass% or more, and even more preferably 90 mass% or more. The content of the polymer in the dispersant may be 100 mass%, and in this case, the dispersant consists only of the polymer.

The pH of the carbon nanotube dispersion of the disclosure may generally be in the range of 4 to 12, preferably in the range of 4 to 6. It is thought that, by adjusting the pH within the above range, the wettability of the carbon nanotubes can be improved, and furthermore, the effect of the polymer as a dispersant can be improved. When the pH is outside the above range, the dispersibility of the carbon nanotubes may decrease, or gelation of a binder may occur. In the case of use in battery applications, there is a risk that problems such as corrosion of various raw materials and exterior materials in the battery are likely to occur.

In the case where water is contained as a solvent, the pH of the carbon nanotube dispersion can be measured using a general pH meter. On the other hand, in the case where substantially no water is contained as a solvent, for example, in the case where only NMP is selected as a solvent, and water is added to the carbon nanotube dispersion so that the solid content concentration after addition of water becomes 50% when the solid content concentration before addition of water is set as 100%, the pH of the carbon nanotube dispersion refers to a value as measured using a general pH meter, and can be measured, for example, by the following method.

While a carbon nanotube dispersion having a solid content concentration of 5% is stirred with a disperser or the like, water is added thereto so that the solid content concentration of the carbon nanotube dispersion becomes 2.5%. After uniform stirring, the pH of the carbon nanotube dispersion can be measured at 25 °C using a benchtop pH meter (SevenCompact S220 Expert Pro, manufactured by Mettler Toledo).

In the disclosure, "substantially no water is contained" means that no water is intentionally added. Based on the mass of the solvent, the content of water is preferably 5 mass% or less, more preferably 1 mass% or less, and even more preferably 0.5 mass% or less.

The pH of the carbon nanotube dispersion is not particularly limited, and can be adjusted depending on (1) the amount of metal hydroxide contained in the carbon nanotubes, (2) the type or amount of functional groups on the surface of the carbon nanotubes, and (3) the type or amount of base added. By adjusting the pH by comprehensively considering factors such as (1) to (3) above, it is possible to obtain a carbon nanotube dispersion not only improved in the wettability of the carbon nanotubes but also excellent in both dispersibility and stability.

As mentioned above, metals or metal oxides, and metal hydroxides used as catalysts in a production process of carbon nanotubes remain in the system. In the residual metal content in the carbon nanotubes, the pH can be adjusted by appropriately adjusting particularly the content of metal hydroxides mentioned in (1) above. The residual metal content and carbon purity of carbon nanotubes as well as the pH of the carbon nanotube dispersion containing the carbon nanotubes can be adjusted by a conventional purification treatment method.

The functional group on the surface of carbon nanotubes mentioned in (2) above is not particularly limited, and examples thereof include carboxyl group, sulfo group, and hydroxyl group. A method for introducing the functional group to carbon nanotubes is not particularly limited. For example, to introduce a carboxyl group to carbon nanotubes, the carbon nanotubes may be heated with an acid having oxidation effects. This operation is preferable since it is relatively easy and enables addition of highly reactive carboxyl groups. Examples of the acids having oxidation effects include concentrated nitric acid, hydrogen peroxide solution, a mixture of sulfuric acid and nitric acid, and aqua regia. Particularly in the case of using concentrated nitric acid, the concentration thereof is preferably 5 mass% or more, more preferably 60 mass% or more. Heating may be performed by a conventional method, and the temperature is preferably equal to or lower than the boiling point of the acid used. For example, in the case of concentrated nitric acid, a range of 50 to 130 °C is preferable. The heating time preferably ranges from 30 minutes to 20 hours, and more preferably ranges from 1 hour to 8 hours. It is preferable that carbon nanotubes do not have an acidic functional group such as carboxyl group or sulfo group. If a large number of acidic functional groups are contained, there is a risk that the carbon nanotube dispersion may gel during storage.

The base added for pH adjustment mentioned in (3) above is not particularly limited. Specifically, at least one base selected from the group consisting of an inorganic base, an inorganic metal salt, an organic hydroxide, and any other organic base may be used.

Examples of inorganic bases and inorganic metal salts include chlorides, hydroxides, carbonates, nitrates, sulfates, phosphates, tungstates, vanadates, molybdates, niobates, or borates of alkali metals or alkaline earth metals; and ammonium hydroxide. Among them, from the perspective of easily supplying cations, chlorides, hydroxides, carbonates, and alkoxides of alkali metals and alkaline earth metals are preferable. Examples of hydroxides of alkali metals include lithium hydroxide, sodium hydroxide, and potassium hydroxide. Examples of hydroxides of alkaline earth metals include calcium hydroxide and magnesium hydroxide. Examples of carbonates of alkali metals include lithium carbonate, lithium hydrogen carbonate, sodium carbonate, sodium hydrogen carbonate, potassium carbonate, and potassium hydrogen carbonate. Examples of alkoxides of alkali metals include lithium methoxide, lithium ethoxide, lithium n-butoxide, lithium t-butoxide, potassium methoxide, potassium ethoxide, potassium n-butoxide, potassium t-butoxide, sodium methoxide, sodium ethoxide, sodium n-butoxide, and sodium t-butoxide. The number of carbon atoms in the alkoxide may be 5 or more. Examples of alkoxides of alkaline earth metals include magnesium methoxide, magnesium ethoxide, magnesium n-butoxide, and magnesium t-butoxide. The number of carbon atoms in the alkoxide may be 5 or more.

Among them, lithium hydroxide, sodium hydroxide, potassium hydroxide, lithium carbonate, sodium carbonate, lithium t-butoxide, potassium t-butoxide, and sodium t-butoxide are more preferable. The metal contained in the inorganic bases in the disclosure may be a transition metal.

An organic hydroxide is a salt containing organic cations and hydroxide ions. Examples of organic hydroxides include trimethyl-2-hydroxyethylammonium hydroxide, tetramethylammonium hydroxide, cetyltrimethylammonium hydroxide, hexadecyltrimethylammonium hydroxide, trimethylphenylammonium hydroxide, 3-trifluoromethyl-phenyltrimethylammonium hydroxide, and benzyltrimethylammonium hydroxide. Among them, trimethyl-2-hydroxyethylammonium hydroxide and tetramethylammonium hydroxide are particularly preferable.

Examples of other organic bases include methylamine, ethylamine, propylamine, butylamine, hexylamine, octylamine, dioctylamine, trioctylamine, aminoethanol, aminopropanol, aminobutanol, and 2-methoxyethylamine. Since these organic bases have high solubility in the electrolyte, excessive use may risk decreasing battery performance. Since these compounds are easily decomposed, there is a possibility that a decomposition product may remain in a coating film; if the decomposition product is present in the battery, there is a risk of decreasing the initial capacity.

The amount of base used is preferably 1 mass% or more, more preferably 2 mass% or more, and even more preferably 3 mass% or more, based on the mass of the polymer. The amount of base used is preferably 20 mass% or less, more preferably 15 mass% or less, and even more preferably 10 mass% or less, based on the mass of the polymer. If the amount used is excessive, there is a risk that the stability of the obtained carbon nanotube dispersion may deteriorate. Furthermore, corrosion of the dispersion device and/or the interior of the battery may be caused.

The reason why dispersibility is improved by adjusting the pH to a predetermined value is not clear, and the following factors can be considered. The reason why dispersibility is improved is not limited to the factors (1) to (3) listed below.

(1) Improving dispersibility of polymer.

By adjusting the pH to a predetermined value, it is possible to improve the adsorption force of a polymer containing one or more selected from the group consisting of a nitrile group-containing structural unit, a carboxyl group-containing structural unit, a hydroxyl group-containing structural unit, and a heterocyclic ring-containing structural unit, to a material to be dispersed. Since a functional group contained in the structural units may form a hydrogen bond, it is thought that a crosslinked structure due to hydrogen bonding can be introduced into molecules of the polymer and be three-dimensionally adsorbed to the material to be dispersed, and a dispersion can be obtained excellent in not only stability but also dispersibility.

(2) Decreasing solution viscosity of polymer.

It is thought that, when a polymer is dissolved in a solvent for use, if the polymer solution has low viscosity, a dispersant is likely to enter into the inside of strongly aggregated carbon nanotubes, and a uniform dispersion can be obtained.

(3) Improving wettability of carbon nanotubes.

In the case of dispersing carbon nanotubes, the carbon nanotubes can be wet with a solvent to thereby reduce the aggregation force between the carbon nanotubes, then can be broken up and stabilized, thereby being made possible to exist as a dispersion. Since carbon nanotubes have significantly lower wettability compared to other conductive materials, actions to improve wettability through pretreatment such as chemical treatment or mechanical crushing of the carbon nanotubes are necessary. However, these treatments may risk reducing conductivity. It is thought that, by adjusting the pH to a predetermined value, the wettability can be dramatically improved without reducing the conductivity possessed by the carbon nanotubes.

The carbon nanotube dispersion of the disclosure may contain a defoaming agent in addition to the dispersant. The defoaming agent may be any defoaming agent having a defoaming effect, such as a commercially available defoaming agent, wetting agent, hydrophilic organic solvent, and water-soluble organic solvent. One type of defoaming agent may be used alone or multiple types of defoaming agents may be used in combination. Examples thereof include: alcohol-based, such as ethanol, propanol, isopropanol, butanol, octyl alcohol, hexadecyl alcohol, acetylene alcohol, ethylene glycol monobutyl ether, methyl cellosolve, butyl cellosolve, propylene glycol monomethyl ether, acetylene glycol, polyoxyalkylene glycol, propylene glycol, and other glycols; fatty acid ester-based, such as diethylene glycol laurate, glycerin monoricinoleate, alkenyl succinic acid derivatives, sorbitan monolaurate, sorbitan trioleate, polyoxyethylene monolaurate, polyoxyethylene sorbitan monolaurate, and natural waxes; amide-based, such as polyoxyalkylene amide and acrylate polyamine; phosphate ester-based, such as tributyl phosphate and sodium octyl phosphate; metal soap-based, such as aluminum stearate and calcium oleate; oil and fat-based, such as animal and vegetable oils, sesame oil, and castor oil; mineral oil-based, such as kerosene and paraffin; silicone-based, such as dimethyl silicone oil, silicone paste, silicone emulsion, organically modified polysiloxane, and fluorosilicone oil.

<Other Conductive Materials>

The carbon nanotube dispersion of the disclosure may optionally contain any other conductive material in addition to carbon nanotubes. Examples of other conductive materials include: metal powders, such as gold, silver, copper, silver-plated copper powder, silver-copper composite powder, silver-copper alloy, amorphous copper, nickel, chromium, palladium, rhodium, ruthenium, indium, silicon, aluminum, tungsten, molybdenum, and platinum; inorganic powder coated with these metals; powder of metal oxides such as silver oxide, indium oxide, tin oxide, zinc oxide, and ruthenium oxide; inorganic powder coated with these metal oxides; and carbon materials, such as carbon black and graphite. The other conductive materials may be used alone or in combination of two or more thereof. In the case of using other conductive materials, carbon black is preferable from the perspective of adsorption performance of the dispersant. The other conductive materials are substances (materials) different from the electrode active material described later.

Examples of carbon black include acetylene black, furnace black, hollow carbon black, channel black, thermal black, and Ketjen black. Carbon black may be neutral, acidic, or basic, and oxidized carbon black or graphitized carbon black may be used.

<Production of Carbon Nanotube Dispersion>

The carbon nanotube dispersion of the disclosure contains bundle-type carbon nanotubes and a solvent, and preferably further contains a dispersant. To obtain the carbon nanotube dispersion of the disclosure, it is preferable to perform a treatment that disperses the treated carbon nanotubes described above in the solvent. A dispersion device used to perform such a treatment is not particularly limited.

As the dispersion device, a dispersion machine generally used for pigment dispersion or the like can be used. Examples thereof include, but are not limited to: mixers, such as a disperser, a homomixer, and a planetary mixer; homogenizers (such as Advanced Digital Sonifier® MODEL 450DA manufactured by BRANSON, "CLEARMIX" manufactured by M Technique, "FILMIX" manufactured by PRIMIX, and "Abramix" manufactured by Silverson); a paint conditioner (manufactured by Red Devil); colloid mills (such as "PUC Colloid Mill" manufactured by PUC and "Colloid Mill MK" manufactured by IKA); cone mills (such as "Cone Mill NMO" manufactured by IKA); ball mills; sand mills (such as "DYNO-MILL" manufactured by Shinmaru Enterprises); attritors; pearl mills (such as DCP Mill" manufactured by Eirich); media-type dispersers such as CoBall mills; wet jet mills (such as "Genus PY" manufactured by Genus, "Starburst" manufactured by Sugino Machine, and "Nanomizer" manufactured by Nanomizer); media-less dispersers, such as "Clear SS-5" manufactured by M Technique and "MICROS" manufactured by Nara Machinery; and other roll mills.

The amount of carbon nanotubes in the carbon nanotube dispersion of the disclosure is preferably 0.2 to 20 parts by mass, more preferably 0.5 to 10 parts by mass, and even more preferably 0.5 to 3.0 parts by mass, with respect to 100 parts by mass of the carbon nanotube dispersion.

The viscosity of the carbon nanotube dispersion of the present embodiment, as measured using a B-type viscometer at 60 rpm, is preferably 10 mPa·s or more and 10000 mPa·s or less, more preferably 10 mPa·s or more and 5000 mPa·s or less, and even more preferably 10 mPa·s or more and 2000 mPa·s or less.

The carbon nanotube dispersion of the disclosure not only achieves excellent dispersibility and conductivity, but also improves durability against external forces such as impact and improves coating film strength. Thus, the carbon nanotube dispersion of the disclosure can be suitably used in a dispersion for forming conductive wiring or transparent conductive films, a dispersion for forming electrochemical devices such as secondary batteries, capacitors, and sensors.

<Carbon Nanotube Resin Composition>

The carbon nanotube resin composition of the disclosure contains a carbon nanotube dispersion and a binder, and can be obtained by mixing and homogenizing the carbon nanotube dispersion and the binder. As a mixing method, a conventionally known method can be used, and the dispersion device described for the aforementioned carbon nanotube dispersion can be used.

<Binder>

The binder in the disclosure is a resin for binding substances such as carbon nanotubes together.

The binder resin can be appropriately selected according to the desired physical properties. Examples thereof include a polymer or copolymer containing as a structural unit, ethylene, propylene, vinyl chloride, vinyl acetate, vinyl alcohol, maleic acid, acrylic acid, acrylic acid ester, methacrylic acid, methacrylic acid ester, acrylonitrile, styrene, vinyl butyral, vinyl acetal, vinyl pyrrolidone or the like; polyurethane resin, polyester resin, phenolic resin, epoxy resin, phenoxy resin, urea resin, melamine resin, alkyd resin, acrylic resin, formaldehyde resin, silicone resin, fluorine resin; cellulose resin, such as carboxymethyl cellulose; rubbers, such as styrene-butadiene rubber and fluorine rubber; and conductive resin such as polyaniline and polyacetylene. A modified form, a mixture, or a copolymer of these resins may also be used.

Among them, in the case where the binder is used as a binder resin for positive electrode films, a polymer or copolymer containing fluorine atoms in molecules, such as polyvinylidene fluoride, polyvinyl fluoride, and tetrafluoroethylene, are preferable in view of resistance properties; in the case where the binder is used as a binder resin for negative electrode films, carboxymethyl cellulose, styrene-butadiene rubber, and polyacrylic acid, which have good adhesion properties, are preferable.

Carboxymethyl cellulose is preferably of high viscosity. For example, the viscosity when carboxymethyl cellulose is made into a 1 mass% aqueous solution is preferably 500 to 6000 mPa·s, more preferably 1000 to 3000 mPa·s. The above viscosity can be measured using a B-type viscometer under conditions of 25 °C and at a rotor rotation speed of 60 rpm.

Carboxymethyl cellulose preferably has a high degree of etherification. For example, the degree of etherification is preferably 0.6 to 1.5, more preferably 0.8 to 1.2.

The type or mass ratio of the binder is appropriately selected in accordance with properties of coexisting substances such as carbon nanotubes and active materials. For example, in the case of using carboxymethyl cellulose, the proportion of carboxymethyl cellulose is preferably 0.5 to 3.0 mass%, and more preferably 1.0 to 2.0 mass%, based on 100 mass% of the active material.

For styrene-butadiene rubber, that generally used as an electrode binder can be used if it is an oil-in-water emulsion. In the case of using styrene-butadiene rubber, the proportion of styrene-butadiene rubber is preferably 0.5 to 3.0 mass%, and more preferably 1.0 to 2.0 mass%, based on 100 mass% of the active material.

In the case of using polyacrylic acid, the proportion of polyacrylic acid is preferably 1 to 25 mass%, and more preferably 5 to 20 mass%, based on 100 mass% of the active material.

A weight average molecular weight of these binder resins is preferably 10000 to 2000000, more preferably 100000 to 1000000, and even more preferably 200000 to 1000000.

<Mixture Slurry>

The mixture slurry of the disclosure contains the aforementioned carbon nanotube resin composition and an active material.

[Active Material]

The active material in the disclosure refers to a material that serves as the basis for battery reaction. The active material may be divided into positive electrode active material and negative electrode active material based on electromotive force.

The positive electrode active material is not particularly limited, and a metal compound such as metal oxide and metal sulfide capable of doping or intercalating lithium ions, and a conductive polymer or the like can be used. Examples thereof include an inorganic compound such as an oxide of a transition metal such as Fe, Co, Ni, and Mn, a composite oxide with lithium, and a transition metal sulfide. Specific examples include: transition metal oxide powders such as MnO, $V_2O_5$, $V_6O_{13}$, and $TiO_2$; composite oxide powders of lithium and transition metal such as lithium nickelate, lithium cobaltate, and lithium manganate, which have a layered structure, and lithium manganate having a spinel structure; a lithium iron phosphate-based material being a phosphate compound having an olivine structure; and transition metal sulfide powders such as $TiS_2$ and FeS. A conductive polymer such as polyaniline, polyacetylene, polypyrrole, and polythiophene can also be used. The above inorganic compound and organic compound may be mixed together for use.

The negative electrode active material is not particularly limited if it is capable of doping or intercalating lithium ions. Examples thereof include: metal Li; alloy-based, such as tin alloys, silicon alloys, and lead alloys, which are alloys of metal Li; metal oxide-based, such as $Li_xFe_2O_3$, $Li_xFe_3O_4$, $Li_xWO_2$ (where x is a number satisfying 0<x<1), lithium titanate, lithium vanadate, and lithium silicate; conductive polymer-based, such as polyacetylene and poly-p-phenylene; amorphous carbonaceous materials such as soft carbon and hard carbon; carbonaceous powders such as artificial graphite such as highly graphitized carbon materials, or natural graphite; carbonaceous materials such as carbon black, mesophase carbon black, resin-baked carbon materials, vapor-grown carbon fibers, and carbon fibers. These negative electrode active materials can be used alone or in combination of multiple types.

In the disclosure, a silicon-based negative electrode active material, which is a negative electrode active material containing silicon such as silicon alloys or lithium silicate, is preferable as the negative electrode active material.

Examples of silicon-based negative electrode active materials include: so-called metallurgical grade silicon, produced by reducing silicon dioxide with carbon; industrial grade silicon, obtained by reducing impurities in metallurgical grade silicon through acid treatment or unidirectional solidification; high-purity silicon having different crystalline states, such as high-purity single crystal, polycrystalline, or amorphous silicon, produced from silane obtained by reacting silicon; and silicon that has been made high-purity while adjusting its crystalline state or precipitation state by a method such as sputtering or electron beam (EB) deposition on industrial grade silicon.

Examples also include: silicon oxide, which is a compound of silicon and oxygen; and a silicon compound, obtained by adjusting silicon, various alloys and their crystalline states by a rapid cooling method or the like. Among them, a silicon-based negative electrode active material is preferable which has a structure in which silicon nanoparticles are dispersed in silicon oxide and covered with a carbon film on the outside.

In the disclosure, it is preferable to use, in addition to the silicon-based negative electrode active material, amorphous carbonaceous materials such as soft carbon and hard carbon, and carbonaceous powders such as artificial graphite such as highly graphitized carbon materials, or natural graphite. Among them, it is preferable to use carbonaceous powder such as artificial graphite or natural graphite.

The amount of silicon-based negative electrode active material is preferably 3 to 50 mass%. and more preferably 5 to 25 mass%, based on 100 mass% of carbonaceous powder such as artificial graphite or natural graphite.

In the disclosure, the BET specific surface area of an active material is preferably 0.1 to 10 $m^2/g$, more preferably 0.2 to 5 $m^2/g$, and even more preferably 0.3 to 3 $m^2/g$.

In the disclosure, the active material has an average particle diameter preferably in the range of 0.5 to 50 $\mu m$, more preferably 2 to 20 $\mu m$. The average particle diameter of the active material referred to in this specification is an average value of particle diameters measured by an electron microscope for the active material.

[Method for Producing Mixture Slurry]

The mixture slurry of the disclosure can be prepared by various conventionally known methods. Examples thereof include a preparation method in which an active material is added to a carbon nanotube resin composition, and a preparation method in which an active material is added to a carbon nanotube dispersion and then a binder is added.

To obtain the mixture slurry of the disclosure, it is preferable to perform a dispersion treatment after adding an active material to a carbon nanotube resin composition. A dispersion device used to perform such treatment is not particularly limited. The mixture slurry can be obtained using the dispersion device described for the aforementioned carbon nanotube dispersion.

In the mixture slurry of the disclosure, the amount of active material is preferably 20 to 85 parts by mass, more preferably 30 to 75 parts by mass, and even more preferably 40 to 70 parts by mass, with respect to 100 parts by mass of the mixture slurry.

In the mixture slurry of the disclosure, the amount of carbon nanotubes is preferably 0.01 to 10 parts by mass, preferably 0.02 to 5 parts by mass, and preferably 0.03 to 1 part by mass, with respect to 100 parts by mass of the active material.

In the mixture slurry of the disclosure, the amount of binder is preferably 0.5 to 30 mass%, more preferably 1 to 25 mass%, and particularly preferably 2 to 20 mass%, with respect to 100 mass% of the active material.

In the mixture slurry of the disclosure, the amount of solid content is preferably 30 to 90 mass%, more preferably 30 to 80 mass%, and preferably 40 to 75 mass%, with respect to 100 mass% of the mixture slurry.

<Conductive Film and Electrode Film>

The conductive film of the disclosure is formed by producing a carbon nanotube dispersion into a film-like form. For example, the conductive film is a coated film formed by coating and drying the carbon nanotube dispersion on a sheet-like substrate. The sheet-like substrate is not particularly limited, and a conductive or non-conductive substrate can be used. As a conductive substrate, current collectors described below or the like can be used.

The electrode film of the disclosure is formed by producing a mixture slurry into a film-like form. For example, the electrode film is a coated film in which an electrode mixture layer is formed by coating and drying the mixture slurry on a current collector.

The material or shape of the current collector used for the electrode film is not particularly limited, and may be appropriately selected to suit various types of secondary batteries. Examples of the material of the current collector include metals or alloys such as aluminum, copper, nickel, titanium, or stainless steel. As for the shape, a flat plate-like foil is generally used, and a roughened surface foil, perforated foil and mesh-like current collector can also be used.

A method for coating the mixture slurry on the current collector is not particularly limited, and a known method can be used. Specific examples include die coating, dip coating, roll coating, doctor coating, knife coating, spray coating, gravure coating, screen printing, and electrostatic coating. As a drying method, natural drying, a forced air dryer, a hot air dryer, an infrared heater, or a far-infrared heater can be used. However, the disclosure is not particularly limited thereto.

After coating, rolling treatment using a flat press or a calendar roll or the like may be performed. An electrode mixture layer has a thickness of generally 1 μm or more and 500 μm or less, and preferably 10 μm or more and 300 μm or less.

<Nonaqueous Electrolyte Secondary Battery>

The nonaqueous electrolyte secondary battery of the disclosure includes a positive electrode, a negative electrode, and an electrolyte, in which at least one of the positive electrode and the negative electrode includes the aforementioned electrode film. In the case where the positive electrode includes the electrode film of the disclosure, the electrode film can be prepared by coating and drying a mixture slurry containing a positive electrode active material on a current collector. In the case where the negative electrode includes the electrode film of the disclosure, the electrode film can be prepared by coating and drying a mixture slurry containing a negative electrode active material on a current collector.

As the electrolyte, various conventionally known materials that allow ion movement can be used. Examples include, but are not limited to, those containing lithium salt, such as $LiBF_4$, $LiClO_4$, $LiPF_6$, $LiAsF_6$, $LiSbF_6$, $LiCF_3SO_3$, $Li(CF_3SO_2)_2N$, $LiC_4F_9SO_3$, $Li(CF_3SO_2)_3C$, LiI, LiBr, LiCl, LiAlCl, $LiHF_2$, LiSCN, or $LiBPh_4$ (where Ph is a phenyl group). Those containing sodium salt or calcium salt can also be used. It is preferable that the electrolyte is dissolved in a nonaqueous solvent and is as an electrolyte solution.

Examples of the nonaqueous solvent include, but are not particularly limited to: carbonates, such as ethylene carbonate, propylene carbonate, butylene carbonate, dimethyl carbonate, ethyl methyl carbonate, and diethyl carbonate; lactones, such as γ-butyrolactone, γ-valerolactone, and γ-octanoic lactone; glymes, such as tetrahydrofuran, 2-methyltetrahydrofuran, 1,3-dioxolane, 4-methyl-1,3-dioxolane, 1,2-methoxyethane, 1,2-ethoxyethane, and 1,2-dibutoxyethane; esters, such as methyl formate, methyl acetate, and methyl propionate; sulfoxides, such as dimethyl sulfoxide and sulfolane; and nitriles, such as acetonitrile. These solvents may be used alone or in combination of two or more thereof.

The nonaqueous electrolyte secondary battery of the disclosure preferably includes a separator. Examples of the separator include, but are not limited to, polyethylene nonwoven fabric, polypropylene nonwoven fabric, polyamide nonwoven fabric, and those subjected to hydrophilic treatment.

A structure of the nonaqueous electrolyte secondary battery of the disclosure is not particularly limited, and generally includes a positive electrode and a negative electrode, and a separator provided as necessary, and can be formed into various shapes according to the intended use, such as paper type, cylindrical type, button type, and laminated type.

Examples

The disclosure will be described in more detail below through examples. The disclosure is not limited to the following examples as long as the gist thereof is not exceeded. Unless otherwise specified, "part" and "%" represent "part by mass" and "mass%", respectively.

<Measurement of Bundle-type CNTs in Dispersion>

In the carbon nanotube dispersion of the examples, values of the number%, average outer diameter, average fiber length, and average aspect ratio of bundle-type CNTs were obtained by SEM image analysis in accordance with the method described in the <Bundle-type Carbon Nanotubes> section above.

<Measurement of Average Diameter of Raw CNTs>

The average diameter of the carbon nanotubes used as a raw material was obtained by TEM image analysis in accordance with the method described in the [Raw Carbon Nanotubes] section above.

<Production of Bundle-type CNTs>

[Production Example of Raw CNT (A)]

A catalyst for CNT synthesis was prepared in accordance with a method described in paragraph [0117] of Japanese Patent Laid-Open No. 2018-150218. After that, a quartz glass heat-resistant dish with 1.5 g of the aforementioned catalyst for CNT synthesis spread thereon was placed in a central portion of a horizontal reaction tube having a capacity of 10 L, which can be pressurized and heated by an external heater. Exhausting was performed while nitrogen gas was injected, the air in the reaction tube was replaced with nitrogen gas, and the atmosphere in the horizontal reaction tube was set to an oxygen concentration of 1 volume% or less. Next, heating was performed with an external heater until a center temperature in the horizontal reaction tube reached 680 °C. After 680 °C was reached, propane gas as a carbon source was introduced into the reaction tube at a flow rate of 2 L per minute, and a contact reaction was carried out for 2 hours. After the reaction was completed, the gas in the reaction tube was replaced with nitrogen gas, and the temperature of the reaction tube was cooled to 100 °C or lower before removal, thereby obtaining CNT (A). The CNT (A) had an average diameter of 9.1 nm.

[Production Example (1)]

100 parts of 8S (carbon nanotubes manufactured by JEIO; having an average diameter of 6.8 nm) as a carbon source and 9900 parts of ethyl alcohol as a treatment solvent were mixed, subjected to wet mixing using FILMIX (manufactured by PRIMIX), followed by heating and drying at 65 °C and removal of the solvent, thereby preparing precursor (1). Next, the precursor (1) was filled in a graphite crucible and heated in a calcination furnace under an argon atmosphere at a temperature increase rate of 10 °C/min. so that a furnace temperature reached 1700 °C, then heat-treated at 1700 °C for 2 hours, thereby obtaining CNT (1).

[Production Examples (2) to (6)]

CNT (2) to (6) were obtained by the same method as in Production Example (1), except for changes in the raw carbon nanotubes, treatment solvent, additive, and calcination conditions as shown in Table 1.

[Production Example (7)]

100 parts of 8S (carbon nanotubes manufactured by JEIO; having an average diameter of 6.8 nm) as a carbon source and 9900 parts of a mixed solvent (solvent in which toluene and n-propyl alcohol were mixed at a mass ratio of 1:1) as a treatment solvent were mixed, subjected to wet mixing using ultrasound, followed by heating and drying at 65 °C and removal of the solvent, thereby preparing precursor (7). Next, the precursor (7) was filled in a graphite crucible and heated in a calcination furnace under an argon atmosphere at a temperature increase rate of 10 °C/min. so that a furnace temperature reached 1700 °C, then heat-treated at 1700 °C for 2 hours, thereby obtaining CNT (7).

[Table 1]

Table 1

| Production Example | Raw CNT | Avg. diameter | Part by mass | Treatment solvent | Additive | Part by mass | Part by mass | Calcination conditions | Treated CNT |
|---|---|---|---|---|---|---|---|---|---|
| (1) | 8S | 6.8 nm | 100 | EA | - | - | 9900 | 1700 °C for 2 hours | CNT (1) |
| (2) | 8S | 6.8 nm | 95 | EA | Boric acid | 8 | 9900 | 1700 °C for 2 hours | CNT (2) |
| (3) | 8S | 6.8 nm | 95 | NPA | - | - | 9900 | 1700 °C for 2 hours | CNT (3) |
| (4) | 8S | 6.8 nm | 95 | W | Boric acid | 8 | 9900 | 1700 °C for 2 hours | CNT (4) |
| (5) | CNT (A) | 9.1 nm | 95 | EA | Boric acid | - | 9900 | 1700 °C for 2 hours | CNT (5) |
| (6) | 100P | 13.7 nm | 95 | EA | Boric acid | 5 | 9900 | 1700 °C for 1 hour | CNT (6) |
| (7) | 8S | 6.8 nm | 95 | TOL/NPA | Boric acid | 8 | 9900 | 1700 °C for 2 hours | CNT (7) |

8S: carbon nanotube (JENOTUBE) manufactured by JEIO
EA: ethyl alcohol
NPA: n-propyl alcohol
W: water
100P: carbon nanotube (JENOTUBE) manufactured by KUMHO PETROCHEMICAL
TOL/NPA: mixed solution of toluene and n-propyl alcohol at a ratio of 1:1 by weight

<Production of CNT Dispersion>

[Example 1] CNT dispersion (W1)

97.7 parts of ion-exchanged water, 0.45 part of dispersant (1) (polyvinylpyrrolidone (K-30, manufactured by Nippon Shokubai)), and 0.05 part of defoaming agent (A) (SN Defoamer 1312, manufactured by San Nopco) were added to a stainless steel container, and the mixture was stirred with a disperser until becoming uniform. Then, while stirring was performed with the disperser, 1.8 parts of treated CNT (1) were added, and the mixture was further stirred with the disperser until becoming uniform. After that, dispersion treatment was performed using a high pressure homogenizer (Starburst 10, manufactured by Sugino Machine). The dispersion treatment was performed using a single nozzle chamber, with a nozzle diameter of 0.17 mm, at a pressure of 100 MPa, and for 6 passes, thereby obtaining CNT dispersion (W1).

[Examples 3, 6, 7, 9, 10] CNT dispersions (W3), (W6), (W7), (W9), (W10)

CNT dispersions (W3), (W6), (W7), (W9), and (W10) were obtained by the same method as in Example 1, except for changes in the type of treated CNT, amount of CNT added, amount of ion-exchanged water added, type of dispersant, amount of dispersant added, amount of defoaming agent added, and number of passes as shown in Table 2.

[Example 4] CNT dispersion (W4)

92.27 parts of ion-exchanged water, 3.2 parts of dispersant (4) (polyacrylic acid (Jurymer AC-10LP, manufactured by Toagosei)), 0.48 part of sodium carbonate ($Na_2CO_3$), and 0.05 part of defoaming agent (A) (SN Defoamer 1312, manufactured by San Nopco) were added to a stainless steel container, and the mixture was stirred with a disperser until becoming uniform. Then, while stirring was performed with the disperser, 4 parts of treated CNT (2) were added, and the mixture was further stirred with the disperser until becoming uniform. After that, dispersion treatment was performed using a high pressure homogenizer (Starburst 10, manufactured by Sugino Machine). The dispersion treatment was performed using a single nozzle chamber, with a nozzle diameter of 0.17 mm, at a pressure of 100 MPa, and for 4 passes, thereby obtaining CNT dispersion (W4).

[Example 2] CNT dispersion (W2)

2 parts of treated CNT (1), 0.5 part of dispersant (7), 0.05 part of defoaming agent (A) (SN Defoamer 1312, manufactured by San Nopco), 97.45 parts of ion-exchanged water, and 140 parts of zirconia beads (having a bead diameter of 0.3 mmφ) were prepared in a glass bottle. Dispersion treatment was performed for 4 hours using a paint conditioner manufactured by Red Devil, followed by separating the zirconia beads, thereby obtaining CNT dispersion (W2).

[Examples 5, 8, 16] CNT dispersions (W5), (W8), (W19)

CNT dispersions (W5), (W8), and (W19) were obtained by the same method as in Example 2, except for changes in the type of treated CNT, amount of CNT added, amount of ion-exchanged water added, type of dispersant, amount of dispersant added, amount of defoaming agent added, and dispersion time as shown in Table 2.

[Example 11] CNT dispersion (W14)

96.44 parts of ion-exchanged water, 2.1 parts of dispersant (4) (polyacrylic acid (Jurymer AC-10LP, manufactured by Toagosei)), 0.21 part of sodium carbonate, and 0.05 part of defoaming agent (A) (SN Defoamer 1312, manufactured by San Nopco) were added to a stainless steel container, and the mixture was stirred with a disperser until becoming uniform. Then, while stirring was performed with the disperser, 1.2 parts of treated CNT (1) were added, and the mixture was further stirred with the disperser until becoming uniform. After that, dispersion treatment was performed using a high pressure homogenizer (Starburst 10, manufactured by Sugino Machine). The dispersion treatment was performed using a single nozzle chamber, with a nozzle diameter of 0.17 mm, at a pressure of 100 MPa, and for 5 passes. The obtained dispersion was subjected to a centrifugal separator to remove precipitates. Furthermore, 80 parts of the above stirred liquid and 120 parts of zirconia beads (having a bead diameter of 1 mmφ) were prepared in a glass bottle. Dispersion treatment was performed for 5 hours using a paint conditioner manufactured by Red Devil, followed by separating the zirconia beads, thereby obtaining CNT dispersion (W14).

[Example 12] CNT dispersion (W15)

CNT dispersion (W15) was obtained by the same method as in Example 11, except for changes in the type of treated CNT, amount of CNT added, amount of ion-exchanged water added, type of dispersant, amount of dispersant added, type of basic compound, amount of basic compound added, amount of defoaming agent added, and dispersion time as shown in Table 2.

[Example 13] CNT dispersion (W16)

CNT dispersion (W16) was obtained by the same method as in Example 11, except for changes in the type of treated CNT, amount of CNT added, amount of ion-exchanged water added, type of dispersant, amount of dispersant added, amount of defoaming agent added, and dispersion time, and no use of a basic compound, as shown in Table 2.

[Example 14] CNT dispersion (W17)

97.95 parts of ion-exchanged water, 0.5 part of dispersant (2) (carboxymethylcellulose sodium salt (APP-084, manufactured by Nippon Paper Industries)), and 0.05 part of defoaming agent (A) (SN Defoamer 1312, manufactured by San Nopco) were added to a stainless steel container, and the mixture was stirred with a disperser until becoming uniform. Then, while stirring was performed with the disperser, 1.2 parts of CNT (1) and 0.3 part of CNT (8) (NFT005, manufactured by Hamamatsu Carbonics) were added, and the mixture was further stirred with the disperser until becoming uniform. After that, dispersion treatment was performed using a high pressure homogenizer (Starburst 10, manufactured by Sugino Machine). The dispersion treatment was performed using a single nozzle chamber, with a nozzle diameter of 0.17 mm, at a pressure of 100 MPa, and for 20 passes. The obtained dispersion was subjected to a centrifugal separator to remove precipitates. Furthermore, 80 parts of the above stirred liquid and 120 parts of zirconia beads (having a bead diameter of 1 mmφ) were prepared in a glass bottle. Dispersion treatment was performed for 10 hours using a paint conditioner manufactured by Red Devil, followed by separating the zirconia beads, thereby obtaining CNT dispersion (W17).

[Example 15] CNT dispersion (W18)

97.95 parts of ion-exchanged water, 0.5 part of dispersant (2) (carboxymethylcellulose sodium salt (APP-084, manufactured by Nippon Paper Industries)), and 0.05 part of defoaming agent (A) (SN Defoamer 1312, manufactured by San Nopco) were added to a stainless steel container, and the mixture was stirred with a disperser until becoming uniform. Then, while stirring was performed with the disperser, 1.35 parts of CNT (1) and 0.15 part of CNT (8) (NFT005, manufactured by Hamamatsu Carbonics) were added, and the mixture was further stirred with the disperser until becoming uniform. After that, dispersion treatment was performed using a high pressure homogenizer (Starburst 10, manufactured by Sugino Machine). The dispersion treatment was performed using a single nozzle chamber, with a nozzle diameter of 0.17 mm, at a pressure of 100 MPa, and for 10 passes. The obtained dispersion was subjected to a centrifugal separator to remove precipitates, and CNT dispersion (W18) was obtained.

[Comparative Example 1]

The treated CNT, the ion-exchanged water, the dispersant, and the defoaming agent in accordance with the composition shown in Table 2 as well as 140 parts of zirconia beads (having a bead diameter of 0.3 mmφ) were prepared in a glass bottle. Dispersion treatment was performed for 20 hours using a paint conditioner manufactured by Red Devil, followed by separating the zirconia beads, thereby obtaining CNT dispersion (W11).

[Comparative Example 2]

The treated CNT, the ion-exchanged water, the dispersant, and the defoaming agent in accordance with the composition shown in Table 2 as well as 140 parts of zirconia beads (having a bead diameter of 0.3 mmφ) were prepared in a glass bottle. Dispersion treatment was performed for 0.5 hour using a paint conditioner manufactured by Red Devil, followed by separating the zirconia beads, thereby obtaining CNT dispersion (W13).

Table 2 shows a list of formulation compositions. The amounts of treated CNT, dispersant, and defoaming agent in the table are all values converted to solid content.

<Evaluation of CNT Dispersion>

The following evaluations were performed using the obtained CNT dispersion. The results are shown in Table 2.

(Viscosity)

The CNT dispersion was left to stand in a constant temperature bath at 25 °C for 1 hour or more, followed by being sufficiently stirred, and was then immediately subjected to measurement using a B-type viscometer rotor at a rotation speed of 60 rpm. The rotor used for measurement was No. 1 for viscosity values less than 100 mPa·s, No. 2 for 100 mPa·s or more and less than 500 mPa·s, No. 3 for 500 mPa·s or more and less than 2000 mPa·s, and No. 4 for 2000 mPa·s or more and less than 10000 mPa·s, respectively.

[Determination Criteria]

◎: less than 2000 mPa·s (excellent)
∘: 2000 mPa·s or more and less than 5000 mPa·s (good)
△: 5000 mPa·s or more and less than 10000 mPa·s (acceptable)
✕: 10000 mPa·s or more; sedimentation or separation (poor)

(Storage Stability)

The CNT dispersion was left to stand and stored at 50 °C for 7 days, a change in liquid properties (ease of stirring when stirred with a spatula) before and after the storage was confirmed, and the evaluation was performed according to the following criteria.

[Determination Criteria]

∘: viscosity has not increased; no problem (good)
△: viscosity has increased but no gelation has occurred (acceptable)
×: gelation has occurred (extremely poor)

(Volume Resistivity)

The CNT dispersion was coated on a PET substrate using an applicator, then dried in an oven at 120 °C for 30 minutes, thereby obtaining a CNT coated film (having a film thickness of 3 $\mu$m). After that, the surface resistivity ($\Omega/\square$) of the coated film after drying was measured using Loresta-GP MCP-T610 manufactured by Nittoseiko Analytech. After measurement, the surface resistivity was multiplied by a thickness of the CNT coated film formed on the PET substrate, and the result was taken as volume resistivity ($\Omega\cdot$cm) of the coated film. The thickness of the coated film was calculated by subtracting the thickness of the PET substrate from an average value obtained by measurement at 5 points in the film using a film thickness meter, and the volume resistivity ($\Omega\cdot$cm) of the coated film was calculated. The determination criteria are shown below.

[Determination Criteria]

◎: volume resistivity ($\Omega\cdot$cm) of CNT coated film being less than $7\times10^{-3}$ (excellent)
∘: volume resistivity ($\Omega\cdot$cm) of CNT coated film being $7\times10^{-3}$ or more and less than $1\times10^{-2}$ (good)
△: volume resistivity ($\Omega\cdot$cm) of CNT coated film being of $1\times10^{-2}$ or more and less than $2\times10^{-2}$ (acceptable)
×: volume resistivity ($\Omega\cdot$cm) of CNT coated film being $2\times10^{-2}$ or more (poor)

(Volume Resistivity of Negative Electrode Film)

First, the obtained CNT dispersion, ion-exchanged water, and 12.5 parts of 2% aqueous solution of CMC (#1190, manufactured by Daicel Fine Chem) were blended, stirred at 2000 rpm for 30 seconds using a rotation-revolution mixer, and a CNT resin composition was obtained. At this time, the amount of CNT dispersion blended was adjusted so that the CNT content in 100 parts of the mixture slurry was 0.27 part.

After that, 2.4 parts of silicon monoxide (SILICON MONOOXIDE, SiO 1.3C, 5 $\mu$m, manufactured by Osaka Titanium Technologies) were added, and the mixture was stirred at 2000 rpm for 30 seconds using a rotation-revolution mixer. Furthermore, 21.9 parts of artificial graphite (CGB-20, manufactured by Nippon Graphite Industries) were added, and the mixture was stirred at 2000 rpm for 30 seconds using a rotation-revolution mixer. After that, 0.78 part of styrene-butadiene emulsion (TRD2001, manufactured by JSR) were added, and the mixture was stirred at 2000 rpm for 30 seconds using a rotation-revolution mixer, and a negative electrode mixture slurry was obtained.

A PET substrate was coated using the obtained negative electrode mixture slurry to achieve an electrode basis weight of 8 mg/cm$^2$, and the resultant was then dried in an electric oven at 120 °C for 30 minutes to obtain a negative electrode. After that, the surface resistivity ($\Omega/\square$) of the coated film after drying was measured using Loresta-GP MCP-T610 manufactured by Nittoseiko Analytech. Meanwhile, the thickness of the PET substrate was subtracted from an average value obtained by measurement at 5 points in the electrode film using a film thickness meter, and a thickness of a negative electrode mixture layer was calculated.

The surface resistivity of the coated film obtained in this manner was multiplied by the thickness of the negative electrode mixture layer, and the volume resistivity ($\Omega\cdot$cm) of the negative electrode mixture layer was calculated and evaluated according to the following determination criteria.

[Determination Criteria]

◎: volume resistivity ($\Omega\cdot$cm) of negative electrode mixture layer being less than 0.12 (excellent)
∘: volume resistivity ($\Omega\cdot$cm) of negative electrode mixture layer being 0.12 or more and less than 0.15 (good)
△: volume resistivity ($\Omega\cdot$cm) of negative electrode mixture layer being 0.15 or more and less than 0.25 (acceptable)
×: volume resistivity ($\Omega\cdot$cm) of negative electrode mixture layer being 0.25 or more (poor)

(Peel Strength of Negative Electrode Film)

The obtained negative electrode mixture slurry was coated on a copper foil using an applicator to achieve an electrode basis weight of 8 mg/cm$^2$, and then the coated film was dried in an oven at 120 °C for 30 minutes. After that, two rectangular pieces of 90 mm × 20 mm were obtained by cutting with the coating direction as the long axis. The peel strength was evaluated using a tensile testing machine according to a 180 degree peel test method. Specifically, a double-sided tape of 100 mm × 30 mm size was attached to a stainless steel plate, and a prepared battery electrode mixture layer was adhered to the other side of the double-sided tape. The negative electrode mixture layer was peeled off while pulling upward from below at a constant speed (50 mm/min.), and an average value of stress at this time was taken as the peel strength. The determination criteria are shown below.

[Determination Criteria]

◎: peel strength (N/cm) of negative electrode mixture layer being 0.5 or more (excellent)
○: peel strength (N/cm) of negative electrode mixture layer being 0.4 or more and less than 0.5 (good)
△: peel strength (N/cm) of negative electrode mixture layer being 0.3 or more and less than 0.4 (acceptable)
×: peel strength (N/cm) of negative electrode mixture layer being less than 0.3 (poor)

(Cycle Characteristics)

First, a standard positive electrode (SC) was prepared as follows.

93 parts by mass of a positive electrode active material (HED® NCM-111 1100, manufactured by BASF TODA Battery Materials), 4 parts by mass of acetylene black (DENKA BLACK® HS100, manufactured by Denka), and 3 parts by mass of PVDF (Kureha KF Polymer W#1300, manufactured by Kureha Battery Materials Japan) were added to a plastic container having a capacity of 150 cm$^3$. These materials were then mixed using a spatula until the powder became uniform. After that, 20.5 parts by mass of NMP were added, and the mixture was stirred at 2000 rpm for 30 seconds using a rotation-revolution mixer. After that, the mixture in the plastic container was mixed using a spatula until becoming uniform, and was stirred at 2000 rpm for 30 seconds using the aforementioned rotation-revolution mixer. Furthermore, 14.6 parts by mass of NMP were added, and the mixture was stirred at 2000 rpm for 30 seconds using the aforementioned rotation-revolution mixer. Finally, the mixture was stirred at 3000 rpm for 10 minutes using a high-speed stirrer, and a mixture slurry for the standard positive electrode was obtained. After that, the mixture slurry for the standard positive electrode was coated on a 20 μm thick aluminum foil serving as a current collector using an applicator, and then dried in an electric oven at 120 °C for 30 minutes so as to adjust a basis weight per unit area of the electrode to 20 mg/cm$^2$. Furthermore, rolling treatment was performed using a roll press to prepare a standard positive electrode (SC) in which the mixture layer had a density of 3.1 g/cm$^3$.

Separately, the obtained mixture slurry for the negative electrode was coated on a 20 μm thick copper foil serving as a current collector using an applicator, and then dried in an oven at 80 °C for 30 minutes to achieve an electrode basis weight of 10 mg/cm$^2$. Furthermore, rolling treatment was performed using a roll press to prepare a negative electrode in which the negative electrode mixture layer had a density of 1.6 g/cm$^3$.

The obtained negative electrode and the standard positive electrode obtained as described above were punched out to 50 mm × 45 mm and 45 mm × 40 mm, respectively, and these electrodes, along with a separator (porous polypropylene film) to be inserted therebetween, were inserted into an aluminum laminated bag and dried in an electric oven at 70 °C for 1 hour. Subsequently, in a glove box filled with argon gas, 2 mL of electrolyte was injected, the aluminum laminated bag was sealed, and a nonaqueous electrolyte secondary battery was prepared.

The above electrolyte is a nonaqueous electrolyte obtained as follows: in a mixed solvent in which ethylene carbonate, dimethyl carbonate, and diethyl carbonate were mixed at a ratio (volume ratio) of 1:1:1, 1 part of vinylene carbonate (VC) relative to 100 parts of the electrolyte was further added as an additive, and LiPF$_6$ was dissolved at a concentration of 1 M.

The obtained nonaqueous electrolyte secondary battery was placed in a constant temperature room at 40 °C, and subjected to charge-discharge measurement using a charge-discharge device (SM-8, manufactured by Hokuto Denko). Constant current-constant voltage (cut-off current: 2.5 mA (0.05 C)) charging was performed at a charging current of 25 mA (0.5 C) with an end-of-charge voltage of 4.3 V, followed by constant current discharging at a discharging current of 25 mA (0.5 C) with an end-of-discharge voltage of 3 V. This operation was repeated 200 times. The cycle characteristics can be expressed by the following Equation 2 as a ratio of the 0.5 C discharge capacity at the 200th cycle to the 0.5 C discharge capacity at the 3rd cycle at 25 °C.

The determination criteria are shown below.

(Equation 2) Cycle characteristics = (0.5 C discharge capacity at the 200th cycle / 0.5 C discharge capacity at the 3rd cycle) × 100 (%) [Equation 2]

[Determination Criteria]

◎◎: cycle characteristics of 85% or more (most excellent)
◎: cycle characteristics of 80% or more and less than 85% (extremely excellent)
∘: cycle characteristics of 70% or more and less than 80% (excellent)
∘△: cycle characteristics of 60% or more and less than 70% (good)
△: cycle characteristics of 50% or more and less than 60% (acceptable)
×: cycle characteristics of less than 50% (poor)

(Rate of Change in Film Thickness Before and After Cycles)

The cells before and after the cycle characteristics evaluation were disassembled, and the rate of change in the thickness of the mixture layer was calculated from cross-sectional observations using SEM. The evaluation was performed according to the following criteria.

S: rate of change (%) in thickness of negative electrode mixture layer being less than 8%
A: rate of change (%) in thickness of negative electrode mixture layer being 8% or higher and less than 10%
B: rate of change (%) in thickness of negative electrode mixture layer being 10% or higher and less than 12%
C: rate of change (%) in thickness of negative electrode mixture layer being 12% or higher

[Table 2]

Table 2

| | | | | Formulation composition | | | | | | | | | Dispersion conditions | | | Characteristics and evaluation of dispersion | | | | | | | | | | | | |
|---|---|---|---|---|---|---|---|---|---|---|---|---|---|---|---|---|---|---|---|---|---|---|---|---|---|---|---|---|
| | | CNT dispersion | Treated CNT | Part by mass | Dispersion solvent | Part by mass | Dispersant | Part by mass | Basic compound | Part by mass | Defoaming agent | Part by mass | Number of passes | Dispersion time | Centrifugation | Proportion of bundle (X) (%) | Avg. outer diameter of bundle (X) (nm) | Avg. fiber length of bundle (X) (μm) | Avg. aspect ratio (X) | Proportion of bundle (Y) (%) | Proportion of bundle (Z) (%) | Proportion of (Y) / Proportion of (Z) | Viscosity | Storage stability | Vol. resistivity | Vol. resistivity of electrode film | Peel strength of electrode film | Cycle characteristics | Rate of change in film thickness |
| Example 1 | (W1) | CNT (1) | 1.8 | Ion-exchanged water | 97.7 | (1) | 0.45 | None | 0 | (A) | 0.05 | 6 | - | - | 2.5 | 70 | 1.2 | 17.1 | 8.8 | 84.3 | 0.10 | ∘ | ∘ | ∘ | ∘ | ∘ | ∘ | A |
| Example 2 | (W2) | CNT (1) | 2 | Ion-exchanged water | 97.45 | (2) | 0.5 | None | 0 | (A) | 0.05 | - | 5 | - | 2.1 | 60 | 2.8 | 46.7 | 8.2 | 76.2 | 0.11 | ∘ | ∘ | ∘ | ∘ | ∘ | ∘ | A |
| Example 3 | (W3) | CNT (2) | 3 | Ion-exchanged water | 94.85 | (3) | 2.1 | None | 0 | (A) | 0.05 | 3 | - | - | 3.1 | 100 | 3.2 | 32.0 | 12 | 83.2 | 0.14 | ◎ | ∘ | ◎ | ◎ | ◎ | ◎ | S |
| Example 4 | (W4) | CNT (2) | 4 | Ion-exchanged water | 92.27 | (4) | 3.2 | Na₂CO₃ | 0.48 | (A) | 0.05 | 4 | - | - | 3.6 | 70 | 2.5 | 35.7 | 9.8 | 83.1 | 0.12 | ◎ | ∘ | ◎ | ∘ | ∘ | ∘ | A |
| Example 5 | (W5) | CNT (3) | 3 | Ion-exchanged water | 94.25 | (5) | 2.7 | None | 0 | (A) | 0.05 | - | 8 | - | 1.9 | 85 | 2.0 | 23.5 | 8.1 | 81.0 | 0.10 | ∘ | ∘ | ∘ | ∘ | ◎ | ∘ | A |
| Example 6 | (W6) | CNT (3) | 2 | Ion-exchanged water | 97.25 | (5) | 0.7 | None | 0 | (A) | 0.05 | 4 | - | - | 1.3 | 90 | 1.8 | 20.0 | 7.7 | 85.5 | 0.09 | ∘ | ∘ | ∘ | ∘ | ∘ | ∘△ | A |
| Example 7 | (W7) | CNT (4) | 0.2 | Ion-exchanged water | 99.735 | (3) | 0.015 | None | 0 | (A) | 0.05 | 8 | - | - | 2.2 | 70 | 1.7 | 24.3 | 9.2 | 81.5 | 0.11 | ∘ | ∘ | ∘ | ∘ | ∘ | ∘ | A |
| Example 8 | (W8) | CNT (4) | 2 | Ion-exchanged water | 97.15 | (3) | 0.8 | None | 0 | (A) | 0.05 | - | 3 | - | 2.5 | 55 | 2.4 | 43.6 | 11 | 82.2 | 0.13 | ∘ | ∘ | ∘ | ∘ | ∘ | ◎ | A |
| Example 9 | (W9) | CNT (5) | 3 | Ion-exchanged water | 94.85 | (3) | 2.1 | None | 0 | (A) | 0.05 | 3 | - | - | 2.3 | 120 | 3.5 | 29.2 | 4.4 | 84.9 | 0.05 | ∘ | ∘ | ∘ | ∘ | ∘ | ∘△ | A |

| Example | | CNT | | Solvent | | Dispersant | | Additive | | Defoamer | | | | | | | | | | | | | | | | | | | | Grade |
|---|---|---|---|---|---|---|---|---|---|---|---|---|---|---|---|---|---|---|---|---|---|---|---|---|---|---|---|---|---|---|
| Example 10 | (W10) | CNT (6) | 3 | Ion-exchanged water | 94.85 | (3) | 2.1 | None | 0 | (A) | 0.05 | 3 | - | - | 2.1 | 140 | 5.5 | 39.3 | 9.2 | 83.4 | 0.11 | ○ | ○ | ○ | ○ | ○ | ○ | A |
| Example 11 | (W14) | CNT (1) | 1.2 | Ion-exchanged water | 96.44 | (4) | 2.1 | $Na_2CO_3$ | 0.21 | (A) | 0.05 | 5 | 5 | Yes | 3.2 | 64 | 8.7 | 135.9 | 32.0 | 45.4 | 0.71 | ○ | ○ | ○ | ○ | ○ | ◎◎ | S |
| Example 12 | (W15) | CNT (2) | 1.5 | Ion-exchanged water | 95.97 | (4) | 2.1 | $Na_2CO_3$ | 0.38 | (A) | 0.05 | 10 | 5 | Yes | 3 | 63 | 7.4 | 117.5 | 34.0 | 53.6 | 0.63 | ○ | ○ | ◎ | ◎ | ○ | ◎◎ | S |
| Example 13 | (W16) | CNT (1) | 2 | Ion-exchanged water | 91.95 | (2) | 6 | None | 0 | (A) | 0.05 | 10 | - | Yes | 1.1 | 56 | 3.2 | 57.1 | 21.0 | 64.7 | 0.32 | ○ | ○ | ◎ | ◎ | ○ | ◎◎ | S |
| Example 14 | (W17) | CNT (1)+ CNT (8) | 1.5 | Ion-exchanged water | 97.95 | (2) | 0.5 | None | 0 | (A) | 0.05 | 20 | 10 | Yes | 1.0 | 70 | 8.6 | 122.9 | 28.0 | 56.8 | 0.49 | ○ | ○ | ◎ | ◎ | ◎ | ◎◎ | S |
| Example 15 | (W18) | CNT (1)+ CNT (8) | 1.5 | Ion-exchanged water | 97.95 | (2) | 0.5 | None | 0 | (A) | 0.05 | 10 | - | Yes | 1.4 | 69 | 3.0 | 43.5 | 24.0 | 59.7 | 0.40 | ○ | ○ | ◎ | ◎ | ◎ | ◎◎ | S |
| Example 16 | (W19) | CNT (3) | 3 | Ion-exchanged water | 94.25 | (5) | 1 | None | 0 | (A) | 0.05 | - | 2 | - | 8 | 64 | 8.7 | 135.9 | 8.9 | 64.0 | 0.14 | ○ | ○ | ○ | ○ | ○ | ○△ | A |
| Comparative Example 1 | (W11) | CNT (2) | 3 | Ion-exchanged water | 94.85 | (2) | 2.1 | None | 0 | (A) | 0.05 | - | 20 | - | 0.1 | 30 | 3.5 | 116.7 | 2.9 | 87.3 | 0.03 | × | △ | × | × | × | × | D |
| Comparative Example 2 | (W13) | CNT (7) | 3 | Ion-exchanged water | 94.85 | (2) | 2.1 | None | 0 | (A) | 0.05 | - | 0.5 | - | 0.1 | 19 | 0.9 | 47.4 | 1.6 | 83.6 | 0.02 | ○ | △ | ○ | ○ | ○ | × | D |

The abbreviations in Table 2 are shown below.

Dispersant (1): polyvinylpyrrolidone (K-30, manufactured by Nippon Shokubai)
Dispersant (2): carboxymethylcellulose sodium salt (APP-084, manufactured by Nippon Paper Industries)
Dispersant (3): carboxymethylcellulose ammonium salt (METOLOSE® SM-4, manufactured by Shin-Etsu Chemical)
Dispersant (4): polyacrylic acid (Jurymer AC-10LP, manufactured by Toagosei)
Dispersant (5): carboxymethylcellulose sodium salt (SUNROSE® F01MC, manufactured by Nippon Paper Industries)
Defoaming agent (A): SN Defoamer 1312, manufactured by San Nopco

According to Table 2, an electrode using the carbon nanotube dispersion of the disclosure that contain bundle-type carbon nanotubes composed of carbon nanotubes having an average diameter of 3 nm to 30 nm and having predetermined outer diameter and fiber length had excellent cycle characteristics. It is inferred that the carbon nanotube dispersion of the disclosure exhibited good cycle characteristics by containing a predetermined amount of predetermined bundle-type carbon nanotubes, maintaining the shape of the coating film and suppressing degradation.
On the other hand, in Comparative Examples 1 and 2, although the carbon nanotubes in the dispersion exhibited good dispersibility or conductivity, the bundles in the carbon nanotube dispersion are not maintained. It is considered that the cycle characteristics deteriorate because it is difficult to maintain the shape of the coating film. The carbon nanotube dispersion using carbon nanotubes subjected to wet treatment with a boron source exhibited relatively excellent cycle characteristics. It is inferred that this is due to the fact that the strength of the bundle-type carbon nanotubes as bundles was improved by using a boron source, and that the dispersibility was improved, making it easy to maintain the bundle shape.
The disclosure includes the following embodiments.

(Item 1) A carbon nanotube dispersion, containing a solvent and bundle-type carbon nanotubes using carbon nanotubes having an average diameter of 3 nm to 30 nm, in which, based on the number of carbon nanotubes having an outer diameter of 10 nm or more contained in the carbon nanotube dispersion, a proportion of the number of bundle-type carbon nanotubes (X) of a shape having an outer diameter of 50 nm to 5 μm and a fiber length of 1 μm to 100 μm is 0.2% or more.
(Item 2) The carbon nanotube dispersion according to Item 1, in which the bundle-type carbon nanotubes (X) of a shape having an outer diameter of 50 nm to 5 μm and a fiber length of 1 μm to 100 μm have an average aspect ratio of 5 to 100.
(Item 3) The carbon nanotube dispersion according to Item 1 or 2, in which a proportion of the number of bundle-type carbon nanotubes (X) of a shape having an outer diameter of 50 nm to 5 μm and a fiber length of 1 μm to 100 μm is 0.2% to 20%.
(Item 4) The carbon nanotube dispersion according to any one of Items 1 to 3, in which, based on the number of carbon nanotubes having an outer diameter of 10 nm or more and a fiber length of 0.2 μm or more contained in the carbon nanotube dispersion, a proportion of the number of bundle-type carbon nanotubes (Y) of a shape having an outer diameter of 10 nm or more and less than 50 nm and a fiber length of 1 μm to 5 μm is 10% to 60%.
(Item 5) The carbon nanotube dispersion according to Item 4, in which a proportion of the number of bundle-type carbon nanotubes (Y) of a shape having an outer diameter of 10 nm or more and less than 50 nm and a fiber length of 1

μm to 5 μm is 20% to 35%.

(Item 6) The carbon nanotube dispersion according to any one of Items 1 to 5, in which, based on the number of carbon nanotubes having an outer diameter of 10 nm or more and a fiber length of 0.2 μm or more contained in the carbon nanotube dispersion, a proportion of the number of bundle-type carbon nanotubes (Z) of a shape having an outer diameter of 10 nm or more and less than 50 nm and a fiber length of 0.2 μm or more and less than 1 μm is 50% to 80%.

(Item 7) The carbon nanotube dispersion according to Item 6, in which a ratio (proportion of the number of (Y) / proportion of the number of (Z)) of the proportion of the number of bundle-type carbon nanotubes (Y) to the proportion of the number of bundle-type carbon nanotubes (Z) is 0.3 to 0.6.

(Item 8) The carbon nanotube dispersion according to any one of Items 1 to 7, further containing a dispersant.

(Item 9) A conductive film, which is a coated film of the carbon nanotube dispersion according to any one of Items 1 to 8.

(Item 10) A carbon nanotube resin composition, containing the carbon nanotube dispersion according to any one of Items 1 to 8 and a binder.

(Item 11) A mixture slurry, containing the carbon nanotube resin composition according to Item 10 and an active material.

(Item 12) An electrode film, which is a coated film of the mixture slurry according to Item 11.

(Item 13) A nonaqueous electrolyte secondary battery, including a positive electrode, a negative electrode, and an electrolyte, in which at least one of the positive electrode and the negative electrode includes the electrode film according to Item 12.

The disclosure of the present application is related to the subject matter described in Japanese Patent Application No. 2022-153032, filed in Japan on September 26, 2022, the entire contents of which are incorporated herein by reference.

## Claims

1. A carbon nanotube dispersion, containing a solvent and bundle-type carbon nanotubes using carbon nanotubes having an average diameter of 3 nm to 30 nm, wherein,
   based on number of carbon nanotubes having an outer diameter of 10 nm or more contained in the carbon nanotube dispersion, a proportion of number of bundle-type carbon nanotubes (X) of a shape having an outer diameter of 50 nm to 5 μm and a fiber length of 1 μm to 100 μm is 0.2% or more.

2. The carbon nanotube dispersion according to claim 1, wherein
   the bundle-type carbon nanotubes (X) of a shape having an outer diameter of 50 nm to 5 μm and a fiber length of 1 μm to 100 μm have an average aspect ratio of 5 to 100.

3. The carbon nanotube dispersion according to claim 1, wherein
   a proportion of number of the bundle-type carbon nanotubes (X) of a shape having an outer diameter of 50 nm to 5 μm and a fiber length of 1 μm to 100 μm is 0.2% to 20%.

4. The carbon nanotube dispersion according to claim 1, wherein,
   based on number of carbon nanotubes having an outer diameter of 10 nm or more and a fiber length of 0.2 μm or more contained in the carbon nanotube dispersion, a proportion of number of bundle-type carbon nanotubes (Y) of a shape having an outer diameter of 10 nm or more and less than 50 nm and a fiber length of 1 μm to 5 μm is 10% to 60%.

5. The carbon nanotube dispersion according to claim 4, wherein
   a proportion of number of the bundle-type carbon nanotubes (Y) of a shape having an outer diameter of 10 nm or more and less than 50 nm and a fiber length of 1 μm to 5 μm is 20% to 35%.

6. The carbon nanotube dispersion according to any one of claims 1 to 5, wherein,
   based on number of carbon nanotubes having an outer diameter of 10 nm or more and a fiber length of 0.2 μm or more contained in the carbon nanotube dispersion, a proportion of number of bundle-type carbon nanotubes (Z) of a shape having an outer diameter of 10 nm or more and less than 50 nm and a fiber length of 0.2 μm or more and less than 1 μm is 50% to 80%.

7. The carbon nanotube dispersion according to claim 6, wherein
   a ratio (proportion of the number of (Y) / proportion of the number of (Z)) of the proportion of number of bundle-type carbon nanotubes (Y) to the proportion of number of bundle-type carbon nanotubes (Z) is 0.3 to 0.6.

8. The carbon nanotube dispersion according to any one of claims 1 to 5, further containing a dispersant.

9. A conductive film, which is a coated film of the carbon nanotube dispersion according to any one of claims 1 to 5.

10. A carbon nanotube resin composition, containing the carbon nanotube dispersion according to any one of claims 1 to 5 and a binder.

11. A mixture slurry, containing the carbon nanotube resin composition according to claim 10 and an active material.

12. An electrode film, which is a coated film of the mixture slurry according to claim 11.

13. A nonaqueous electrolyte secondary battery, comprising a positive electrode, a negative electrode, and an electrolyte, wherein
at least one of the positive electrode and the negative electrode comprises the electrode film according to claim 12.

FIG. 1

## INTERNATIONAL SEARCH REPORT

International application No.

**PCT/JP2023/035026**

### A. CLASSIFICATION OF SUBJECT MATTER

***H01M 4/62***(2006.01)i; ***C09D 17/00***(2006.01)i; ***H01B 1/24***(2006.01)i; ***H01M 4/13***(2010.01)i; ***H01M 4/139***(2010.01)i
FI: H01M4/62 Z; H01M4/139; H01M4/13; H01B1/24 A; C09D17/00

According to International Patent Classification (IPC) or to both national classification and IPC

### B. FIELDS SEARCHED

Minimum documentation searched (classification system followed by classification symbols)

H01M4/62; C09D17/00; H01B1/24; H01M4/13; H01M4/139

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | CN 114300686 A (NINGDE NEW ENERGY SCIENCE AND TECHNOLOGY LIMITED COMPANY) 08 April 2022 (2022-04-08) paragraphs [0016], [0018], [0038], [0039], [0063], [0065], [0078]-[0080] | 1-3, 8-13 |
| A | | 4-7 |
| A | US 2021/0408519 A1 (HYUNDAI MOTOR COMPANY) 30 December 2021 (2021-12-30) | 1-13 |
| A | JP 2022-529987 A (LG ENERGY SOLUTION, LIMITED) 27 June 2022 (2022-06-27) | 1-13 |
| A | JP 2018-535284 A (LG CHEM, LIMITED) 29 November 2018 (2018-11-29) | 1-13 |
| A | WO 2022/085694 A1 (ASAHI KASEI KABUSHIKI KAISHA) 28 April 2022 (2022-04-28) | 1-13 |

☐ Further documents are listed in the continuation of Box C.  ☑ See patent family annex.

| | |
|---|---|
| *  Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **13 December 2023** | **26 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/035026**

| Patent document cited in search report | | | Publication date (day/month/year) | Patent family member(s) | | | Publication date (day/month/year) |
|---|---|---|---|---|---|---|---|
| CN | 114300686 | A | 08 April 2022 | (Family: none) | | | |
| US | 2021/0408519 | A1 | 30 December 2021 | KR | 10-2022-0000508 | A | |
| JP | 2022-529987 | A | 27 June 2022 | US | 2022/0320518 | A1 | |
| | | | | WO | 2021/066554 | A1 | |
| | | | | EP | 3951953 | A1 | |
| | | | | KR | 10-2021-0040801 | A | |
| | | | | CN | 113785422 | A | |
| JP | 2018-535284 | A | 29 November 2018 | US | 2018/0269485 | A1 | |
| | | | | WO | 2017/052064 | A1 | |
| | | | | EP | 3355391 | A1 | |
| | | | | KR | 10-2017-0037458 | A | |
| | | | | CN | 108028386 | A | |
| WO | 2022/085694 | A1 | 28 April 2022 | KR | 10-2023-0029985 | A | |
| | | | | CN | 116114041 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H4155776 A
- JP H4237971 A
- JP 2004178922 A
- JP 2018534731 W
- JP 2018534747 W
- JP 2018150218 A
- JP 2022153032 A